# EUROPEAN PATENT APPLICATION

(11) **EP 1 589 147 A1**
(43) Date of publication of application: **26.10.2005**
(21) Application number: 03775974.3
(22) Date of filing: 28.11.2003
(51) Int. Cl.: D21B 1/08

(54) **WASTE PAPER FIBROUS MATERIAL UTILIZATION SYSTEM AND WASTE PAPER DISINTEGRATION APPARATUS**

(30) Priority: 03.12.2002 JP 2002351444; 12.02.2003 JP 2003033896; 27.05.2003 JP 2003149514; 15.10.2003 JP 2003035559
(71) Applicant: TAMAPACK CO,LTD., Akishima-shi, Tokyo 196-0022 (JP)
(72) Inventor: YAMADA, Masao, TAMAPACK Co., Ltd., Akishima-shi, Tokyo 196-0022 (JP)
(74) Representative: Lucas, Phillip Brian
(86) International application number: PCT/JP2003/015288
(87) International publication number: WO 2004/050984

(57) **Abstract**

It is an object of the present invention to provide a waste paper fiber utilization system and a waste paper disintegration device which can prevent information from leaking and cause no waste liquid while reducing the disintegration cost of waste paper. The waste paper disintegration device 13 disintegrates waste paper 11-1 by pouring a weight of water equivalent of 60~100 percent of the weight of the waste paper 11-1 and rotating a rotary feather 13-7 provided with a plurality of feathers, the disintegrated fibers 11-2 are transported to a paper mill 15 or a recycling plant 16 and recycled products, such as recycled paper, containers, decorative objects, horticultural soil, railway sleepers, heat insulating materials, incombustible materials, culture media for plants, cushions, waste liquid filters, smoke filters, oil absorbents or the like are produced.

## Description

### Technical Field

The present invention relates to a waste paper fiber utilization system for disintegrating waste paper into fibers and recycling the fibers to a variety of products, and more particularly to a waste paper disintegration device for disintegrating waste paper so as to recycle waste paper, such as secret documents, newspapers, magazines and the like, discharged from factories and the like, without waste.

### Background Art

Generally, waste paper discharged from factories, the home and the like (such as used copied paper, newspapers, magazines, used corrugated cardboard, laminated paper and the like) are firstly collected in a collecting place called a ragmen's agent by a waste paper collector (such as a newspaper depot, a garbage collector, a neighborhood self-governing body or the like) using a bicycle-drawn cart, a mini-car or the like. Then, collected waste paper is sorted, packed in a predetermined size and transported to a waste wholesale dealer called a paper material dealer by a middle-sized truck or the like. Then, the waste paper stored at the paper material dealer is transported to the store or the like of a paper manufacturing company by a large-sized truck or the like, as requested by the paper manufacturing company.

In the plant or the like of the paper manufacturing company, waste paper is disintegrated into fibers by a pulper (device for stirring up waste paper with water, eliminating ink from it and adding a chemical to bleach it) and eliminating extra dust, such as hardware, plastic and the like, from the fibers by a cleaner or a screen (device for eliminating substances heavier than a fiber by centrifugal force). Then, ink is eliminated from the fibers by a floatater (device for pouring air into liquefied fiber, floating ink together with bubbles and separating ink from the fiber). Then, water is removed by a thickener (device for dehydrating a fiber by applying pressure to it) . Traditionally, fibers have been obtained from waste paper by such a process.

Then, for example, as disclosed by Japanese Patent Application No. H9-38629, the fibers is recycled to paper or the like.

For example, as disclosed by Japanese Patent Application Nos. 2002-125456, 2001-140180, 2000-1801, H8-284100, H8-19769, H7-82686, H7-16810, H6-313299, H5-246465 and H9-271663, decorative objects, horticultural soil, railway sleepers, heat insulating materials, incombustible materials, culture media for plants, cushions, oil absorbents and the like have been produced by mixing the fibers with a predetermined additive.

For example, as disclosed by Japanese Patent Application Nos. H8-215595, H7-26483, H6-292837, H6-154636, H6-134332 and H6-134331, for a method for disintegrating waste paper, a dry method of adding no water and a moist method of adding water are used.

According to the dry waste paper disintegration method, since dust and static electricity occur when disintegrating waste paper, the method is unsanitary, which is a sanitary problem. According to the method, since a device for disintegrating waste paper is excessively loaded, it is difficult to efficiently disintegrate waste paper, which is another problem.

However, according to the moist waste paper disintegration method, since waste paper is disintegrated while adding water, neither dust nor static electricity occurs. According to the method, since the load of a device for disintegrating waste paper is reduced, waste paper can be efficiently disintegrated.

For example, as disclosed by Japanese Patent Application No. H11-169738, in the traditional waste paper disintegration method, waste paper is also cut into fine paper pieces by a shredder or the like beforehand, and the paper pieces are also disintegrated.

For example, traditionally, a vehicle mounting a device for cutting waste paper, such as a shredder or the like, visits a factory or the like, packs the cut waste paper after finely cutting secret documents discharged from the plant by a shredder or the like and transports them to a recycled paper mill or the like.

However, such a process (pulper process) of disintegrating waste paper into fibers, a process (floatater process) of eliminating ink from the fibers and a process (thickener process) of dehydrating the fibers as described above need a large amount of water (for example, the amount of water is about 100 times as much as wasted paper to be used), and also a large amount of waste liquid occurs. Facilities for purifying such a large amount of water require an enormous cost, which is another problem.

In the traditional moist waste paper disintegration method, since each device used for each process, such as a pulper, a floatater and the like, has a complex structure and a large size, a wide area is needed when installing it, which is another problem.

Since sometimes a part of the fibers flows out together with the waste liquid when dehydrating the fibers, it is difficult to recycle the entire waste paper to paper or products, which is another problem. Generally, only 70% of waste paper is recycled to paper and products, and the remaining 30% of it flows out as waste liquid, which cannot be used.

Since trade secrets contained in waste paper discharged from a factory, a public office, a university and the like, such as used computer paper, used copied paper and the like, must be prevented from leaking, the waste paper is finely cut by a shredder or the like in such a way that the trade secret cannot be read, or it is burnt without being cut. Such waste paper cut by a shredder or the like is also transported to a paper mill or a recycling plant and is recycled. However, in this case, since the length of a fiber is cut shorter and waste paper floats on water, it is difficult to recycle it or the quality of a recycled paper and a recycled product is not so good, which is another problem.

Furthermore, it takes a transportation cost to collect or transport waste paper. It also takes many personnel expenses and equipment costs to cut a large amount of waste paper discharged in a day. Therefore, the cost of recycling the fibers to paper or products becomes about 30% higher than that of producing paper or pulp products from ordinary wood or the like, which is another problem.

Thus, it is an object of the present invention to provide a waste paper fiber utilization system and a waste paper disintegration device which reduce the cost of disintegrating waste paper and cause no waste liquid, in order to solve the above-mentioned problems.

### Disclosure of Invention

In order to solve the above-mentioned problems, the present invention adopts the following configuration.

Specifically, the waste paper fiber utilization system of the present invention comprises a disintegration unit for disintegrating waste paper into fibers and a recycling unit for recycling the fibers to products. The disintegration unit disintegrates waste paper into fibers using an amount of water such that no waste liquid may be caused even when compressing the disintegrated fibers.

Thus, an amount of used water can be remarkably reduced. Good recycled paper or recycled products can be produced at low cost.

Alternatively, the waste paper fiber utilization system can disintegrate waste paper into fibers at a yield of 100% using an amount of water such that a ratio in weight of waste paper to be disintegrated to water is 1 to 0.6~1.0.

Since by traditionally disintegrating copied paper discharged from a plant or the like, using an amount of water such that a ratio in weight of waste paper to water is 1 to 0.6~1.0, disintegrated waste paper can be directly recycled to paper or a product without cutting it by a shredder or the like, a process of recycling the waste paper to the paper or a product can be simplified. Thus, the used amount of water can be remarkably reduced. Good recycled paper or recycled products can be produced at low costs.

The recycling unit of the waste paper fiber utilization system can also mix the above-mentioned fibers with a predetermined additive (such as a mixture of one or more of plaster, rubber, paste, fillings, ceramic powder, carbon powder, copper wires, iron wires, cement, inorganic powder and zeolite) and can produce a substance with a specific characteristic. Alternatively, the fibers can be colored in a predetermined color.

Thus, a variety of products, such as cardboard, decorative objects, horticultural soil, railway sleepers, heat insulation materials, incombustible materials, culture media for plants, cushions, smoke filters, waste oil filters, oil absorbents and the like can be produced.

The waste paper fiber disintegration device disintegrates waste paper into fibers. The waste paper fiber integration device comprises a rotary feather with a plurality of feathers extending from its center, a storage unit provided with the rotary feathers inside it, for storing the waste paper, a pouring unit for pouring an amount of water such that capable of disintegrating waste paper into fibers and no waste liquid may be caused even when compressing the disintegrated fibers, into the storage unit and a control unit for controlling the rotation speed of the rotary feather, based on the type, combination and weight of waste paper to be stored in the storage unit.

The pouring unit of the waste paper disintegration device can also pour an amount of water such that a ratio in weight of waste paper to water is 1 to 0.6~1.0 when disintegrating the waste paper.

Thus, since by traditionally disintegrating copied paper discharged from a plant or the like, using an amount of water such that a ratio in weight of waste paper to water is 1 to 0.6~1.0, disintegrated waste paper can be directly recycled to paper or a product without cutting it by a shredder or the like, good recycled paper or products can be easily produced.

In the waste paper disintegration device, the control unit can also control a rotation time and the amount of water, based on the type, combination and weight of waste paper stored in the storage unit.

Thus, waste paper can be more efficiently disintegrated.

Alternatively, the waste paper disintegration device can be provided with a projection of a predetermined length on the inner side of the storage unit.

Thus, the idle rotation of the rotary feather due to the floating of waste paper can be prevented, and waste paper can be efficiently disintegrated.

Alternatively, the waste paper disintegration device can be provided with a bowl-shaped or conic member on the inner side of the storage unit.

Thus, the idle rotation of the rotary feather due to the floating of waste paper can be prevented, and waste paper can be efficiently disintegrated.

In the waste paper disintegration device, the cover of the storage unit can also be provided with one or more holes.

Thus, the status of the storage unit can be observed without opening the cover. Since a bar can be inserted through the hole from the outside, for example, waste paper can be pushed down using the bar when waste paper rises inside the storage unit and accumulates one-sidedly about the cover. Thus, waste paper can be efficiently disintegrated.

Alternatively, a mechanism for pushing down waste paper to the back of the cover can be used.

Thus, the idle rotation of the rotary feather due to the floating of waste paper can be prevented, and waste paper can be efficiently disintegrated.

Alternatively, the waste paper disintegration device can be provided with a projection of a predetermined length on the inner side of the bowl-shaped or conic member.

Thus, the idle rotation of the rotary feather due to the floating of waste paper can be prevented, and waste paper can be efficiently disintegrated.

The rotary feather of the waste paper disintegration device can also be formed in such a way that a space of a predetermined size can be secured between the inside of the storage unit and the tip of the plurality of rotary feathers.

Thus, since the amount of waste paper clinging to the rotary feather can be reduced, the load of the rotary feather can be reduced and accordingly, the life of the rotary feather can be extended.

In the waste paper disintegration device, the plurality of rotary feathers can also be extended more as it goes farther away from its center of the rotary feather.

Thus, waste paper accumulating near the inner side of the storage unit due to the rotating operation of the rotary feather can be efficiently crushed.

The storage unit can also be provided with two or more rotary feathers of the waste paper disintegration device.

Thus, since the load of each rotary feather can be reduced, the life of the rotary feather can be extended.

Alternatively, the waste paper fiber disintegration unit can be provided with one or more rotary feathers on the inner side of the cover of the storage unit.

Thus, waste paper can be more efficiently disintegrated, compared with a case where a rotary feather is provided only on the inner side of the storage unit.

Alternatively, the waste paper disintegration device can be provided with one or more rotary feathers on the inner side of the storage unit.

Thus, waste paper got together near the inner side of the storage unit due to the rotating operation of the rotary feather can be efficiently disintegrated (crushed).

The waste paper disintegration device can also further comprise a display unit, provided for the storage unit, capable of observing the status inside the storage unit from the outside.

Thus, waste paper can be disintegrated into desired fibers.

The waste paper disintegration device can also further comprise an illumination unit for illuminating the inside of the storage unit.

Thus, the status of the storage unit can be more clearly checked.

The storage unit of the waste paper disintegration device can also be inclined at a predetermined angle formed between a shaft connecting its center point of the base of the storage unit with its center point of the opening part of the storage unit and a shaft perpendicular to the ground.

Thus, since waste paper collectively gets together at the bottom of the storage unit, the waste paper can be more efficiently disintegrated.

Alternatively, the storage unit of the waste paper disintegration device can be composed of a plurality of storage units. In this case, of the plurality of storage units, a predetermined storage unit disintegrates waste paper into fibers and another storage unit can further disintegrate the waste paper disintegrated by the predetermined storage unit into fibers.

Thus, since the entire load of the rotary feathers can be distributed, the load of each rotary feather can be reduced, and accordingly, the life of each rotary feather can be extended.

Another waste paper disintegration device of the present invention also disintegrates waste paper into fibers. The waste paper disintegration device comprises a storage unit which stores the waste paper and whose side rotates at a predetermined speed, one or more projection members provided inside the storage unit, a pouring unit for pouring an amount of water such that capable of disintegrating waste paper into fibers and no waste liquid may be caused even when compressing the disintegrated fibers, into the storage unit and a control unit for controlling the rotation speed of the side of the storage unit, based on the type, combination and weight of the waste paper to be stored in the storage unit.

In such a configuration, waste paper can also be disintegrated into desired fibers, as in the waste paper disintegration device for disintegrating waste paper into fibers by rotating a rotary feather.

Another waste paper disintegration device of the present invention also disintegrates waste paper into fibers. The waste paper disintegration device comprises a storage unit whose cover rotates at predetermined speed, one or more projection members provided on the inside of the cover of the storage unit, a pouring unit for pouring an amount of water such that capable of disintegrating waste paper fibers and no waste liquid may be caused even when compressing the disintegrated fibers, into the storage unit and a control unit for controlling the rotation speed of the cover of the storage unit, based on the type, combination and weight of the waste paper to be stored in the storage unit.

In such a configuration, waste paper can also be disintegrated into desired fibers, as in the waste paper disintegration device for disintegrating waste paper into fibers by rotating a rotary feather.

Another waste paper fiber utilization system of the present invention comprises a terminal device installed for a user, which is the renter of a waste paper disintegration device for disintegrating waste paper into fibers, a recycling unit for recycling the fibers to a product, a monitor unit for monitoring the disintegration work of the waste paper in the waste paper disintegration device, a management unit for receiving data indicating the monitored contents of the monitor unit from the monitor unit via a network and recording it, and a transmitting unit for transmitting the monitored data recorded in the management unit to the terminal device via the network. The waste paper disintegration device can disintegrate the waste paper into fibers, using an amount of water such that no waste liquid may be caused even when compressing the disintegrated fibers.

Thus, a user can easily disintegrate waste paper, such as secret documents and the like, even while doing routine work.

The waste paper disintegration device can also be provided with two feathers each of which extends in the same linear direction from its center, and each of the two feathers can also be provided with a collision plate which collides with and crashes waste paper when the rotary feather rotates.

In such a configuration, waste paper can also be disintegrated into desired fibers by rotating a rotary feather.

Alternatively, the collision plate of the waste paper disintegration device can be vertically provided for each of the two feathers, disposed in the direction orthogonal to the linear direction and also extended upward against the two feathers.

In such a structure, waste paper can also be disintegrated into desired fibers by rotating a rotary feather.

Alternatively, the rotary feather of the waste paper disintegration device can be provided with a long and slender projection member in a position higher than the collision plate provided on each of the two feathers.

In such a structure, waste paper can also be disintegrated into desired fibers by rotating a rotary feather.

Alternatively, the rotary feather of the waste paper disintegration device can rotate and also shift vertically against the storage unit.

Thus, waste paper, which rises due to the rotation of a rotary feather, can also be disintegrated, and also the entire waste paper stored in the storage unit can also be efficiently disintegrated.

Alternatively, the cover of the storage unit of the waste paper disintegration device can be shifted vertically against the storage unit during the rotation of the rotary feather.

Thus, waste paper, which rises due to the rotation of a rotary feather, can also be disintegrated, and also the entire waste paper stored in the storage unit can also be efficiently disintegrated.

The waste paper disintegration device can also further comprise a heating unit provided on the outer circumference of the storage, for generating heat with a predetermined temperature and an adjustment unit for adjusting the temperature of heat generated by the heating unit.

Thus, waste paper can be satisfactorily disintegrated.

Another waste paper disintegration device of the present invention disintegrates waste paper into fibers. The waste paper disintegration device comprises a supply unit for supplying a predetermined amount of water to the entire waste paper, a first storage unit with a rotary feather for disintegrating waste paper containing the predetermined amount of water supplied by the supply unit, into fibers, a control unit for controlling the rotating operation of the rotary feather, a second storage unit provided beneath or side by side the first storage unit, for storing the waste paper disintegrated by the rotary feather and holes with a size such that the waste paper disintegrated by the rotary feather can pass through it, provided on a wall for separating the first and second storage units from each other.

In this case, since the waste paper disintegrated by the first storage unit can be stored in the second storage unit provided beneath the first storage unit, the size of the entire device can be made smaller than that of the traditional waste paper disintegration device in which waste paper disintegrated into fibers is horizontally shifted.

Since the entire amount of waste paper can be made to contain a predetermined amount of water, the entire amount of waste paper can be completely disintegrated, and accordingly, security can be improved.

Since the entire amount of waste paper can be made to contain a predetermined amount of water, paper dust, static electricity and noise traditionally caused by disintegrating waste paper without water can be prevented from occurring.

The supply unit of the waste paper disintegration device can also further comprise a first cylindrical member which touches on one surface of the waste paper, for feeding the waste paper to the first storage when rotating the cylindrical member in a predetermined direction, and a second cylindrical member which touches on the other surface of the waste paper, for feeding the waste paper to the first storage unit when rotating the cylindrical member in the direction the reverse of the rotating direction of the first cylindrical member. The supply unit can also supply the predetermined amount of water to at least one of the first and second cylindrical members.

In such a configuration, the entire waste paper disintegration device can be miniaturized. Simultaneously, security can be improved, and accordingly, paper dust, static electricity and noise can be prevented from occurring when disintegrating waste paper.

Alternatively, the supply unit of the waste paper disintegration device can supply the predetermined amount of water to both the first and second cylindrical members.

In such a structure, the entire waste paper disintegration device can be miniaturized. Simultaneously, security can be improved, and accordingly, paper dust, static electricity and noise can be prevented from occurring when disintegrating waste paper.

The waste paper disintegration device can also further comprise an opening/closing unit, provided on a wall for separating the first and second storage units from each other in order to open/close the holes.

Thus, since waste paper can be stored until the entire amount of waste paper is completely disintegrated into fibers, security can be further improved.

The waste paper disintegration device can also further comprise a third storage unit for storing a plurality of pieces of waste paper before disintegration and a feeding unit for feeding the waste paper from the third storage unit to the supply unit at predetermined time intervals.

Thus, waste paper can be automatically fed to the supply unit.

The supply unit of the waste paper disintegration device can also comprise a first cylindrical member which touches on one surface of the waste paper, for feeding the waste paper to the first storage by rotating the cylindrical member in a predetermined direction, a second cylindrical member which touches on the other surface of the waste paper, for feeding the waste paper to the first storage unit by rotating the cylindrical member in the direction the reversal of the rotation direction of the first cylindrical member and a spraying unit for producing fog from the predetermined amount of water and spraying it before the waste paper is fed by the first and second cylindrical members.

In such a configuration, the entire waste paper disintegration device can be miniaturized. Simultaneously, security can be improved, and accordingly, paper dust, static electricity and noise can be prevented from occurring when disintegrating waste paper.

The first storage unit of the waste paper disintegration device can be inclined by a predetermined angle.

In such a configuration, the entire waste paper disintegration device can be miniaturized. Simultaneously, security can be improved, and accordingly, paper dust, static electricity and noise can be prevented from occurring when disintegrating waste paper.

The rotary feather of the waste paper disintegration device can also be provided on the side of the first storage unit.

In such a structure, the entire waste paper disintegration device can be miniaturized. Simultaneously, security can be improved, and accordingly, paper dust, static electricity and noise can be prevented from occurring when disintegrating waste paper.

The waste paper disintegration device can also be provided with a plurality of circular blades at equal intervals on the side of the first cylindrical member, and be provided with a plurality of grooves corresponding to the plurality of blades, on the side of the second cylindrical member.

In this case, since waste paper can be cut into pieces with a predetermined size before the waste paper is stored in the second storage unit, the load of the rotary feather can be reduced, and accordingly, the life of the rotary feather can be extended.

Alternatively, the waste paper disintegration device can be provided with a plurality of convex parts on the first cylindrical member, and be provided with a plurality of concave parts corresponding to the plurality of convex parts, on the side of the second cylindrical member.

In this case, since a plurality of holes can be opened on waste paper before the waste paper is stored in the first storage unit, the waste paper can be quickly disintegrated, and also the load of the rotary feather can be reduced, the life of the rotary feather can be extended.

The control unit of the waste paper disintegration device can also control the rotating operation of the plurality of rotary feathers provided on the rotation shaft.

In this case, since waste paper can be more efficiently disintegrated and also the load of each rotary feather can be reduced, the life of the rotary feather can be extended.

The supply unit of the waste paper disintegration device can also further comprise a third cylindrical member which touches on one surface of waste paper, for feeding the waste paper to the first storage unit and a clumping plate for clumping the other surface of the waste paper. In this case, the third cylindrical member can also be provided with a plurality of spike-shape members on the side.

In this case, since a plurality of holes can be opened on waste paper before the waste paper is stored in the first storage unit, the waste paper can be quickly disintegrated. Simultaneously, since the load of the rotary feather can be reduced, the life of the rotary feather can be extended.

The first storage unit of the waste paper disintegration device can also be provided with one or more projections on its inner side.

Thus, waste paper containing water can be prevented from sticking to the inside of the first storage unit.

The first storage unit of the waste paper disintegration device can also be provided with a coiled groove on its inner side.

Thus, waste paper containing water can be prevented from sticking to the inside of the first storage unit.

The first storage unit of the waste paper disintegration device can also be provided with a vertical or horizontal groove on its inner side.

Thus, waste paper containing water can be prevented from sticking to the inside of the first storage unit.

The storage unit of the waste paper disintegration device can also further comprise a pole member with a side along each rotation orbit of the two or more rotary feathers.

Thus, no non-disintegrated waste paper is left on the inner side of the storage unit, and a large amount of waste paper can be efficiently disintegrated.

The rotary feather of the waste paper disintegration device can also further comprise a cylindrical member on a rotation shaft and a bar member on the side of the cylindrical member.

Thus, waste paper can be more efficiently disintegrated while suppressing noise.

Alternatively, the rotary feather of the waste paper disintegration device can also further comprise a cylindrical member on a rotation shaft and a string member on the side of the cylindrical member.

Thus, waste paper can be more efficiently disintegrated while suppressing noise.

The recycling unit of the waste paper fiber utilization system can also put the fibers in a semi-cylinder, such as a half-cut green bamboo formed in a predetermined shape, a semi-angular cylinder or another semi-cylinder, or in a cylinder, such as a full green bamboo, an angular cylinder or another cylinder, and the fibers are used as a culture medium in vertical afforestation, hanging afforestation or other afforestation.

In this case, since by using the fibers as a culture medium, plants can be planted without using real soil and also no culture medium drops from a cylinder or the like, a roof-top garden, vertical affoerestation and hanging afforestation can be realized at low costs.

Alternatively, the recycling unit of the waste paper fiber utilization system can produce flame-resistant fibers by mixing the fibers with boron, anti-flame materials, flame-resistant materials or another materials, fill the flame-resistant fibers in a flame-resistant box, bag or another flame-resistant container to produce a heat insulating material.

Thus, a light and inexpensive heat insulating material can be produced.

Alternatively, the recycling unit of the waste paper fiber utilization system can produce a culture medium as a needle-point flower holder by making the fibers contain water or fluid fertilizer.

Thus, a roof-top garden, vertical affoerestation and hanging afforestation can be realized at low costs.

Another waste paper fiber utilization system of the present invention can also comprise a disintegration unit for disintegrating the waste paper into fibers, using an amount of water such that capable of disintegrating the waste paper into fibers and no waste liquid may be caused even when compressing the disintegrated fibers, a recycling unit for recycling the fibers to a product, according to the instruction of a user, a monitor unit for monitoring and recording the disintegration work of waste paper by the disintegration unit and the recycling work of a product by the recycling unit and a feeding unit for transmitting the monitored contents recorded by the monitor unit via a network to the terminal device of a user.

Thus, a user can easily recycle waste paper to a desired product.

### Brief Description of Drawings

The present invention will be more apparent when the detailed description, which is described later, is referenced by the following attached drawings.
Fig. 1 shows the basic configuration of the waste paper fiber utilization system in the preferred embodiment of the present invention.
Fig. 2 is a flowchart showing the process ranging from the collection of waste paper to the recycling of paper or a product.
Fig. 3A is the perspective illustration of the waste paper disintegration device.
Fig. 3B is the section view of the waste paper disintegration device, viewed from the direction of an arrow A.
Fig. 4A is the perspective illustration of another inner cover.
Fig. 4B is the view of another inner cover viewed from the bottom.
Fig. 4C is the section view of the inner cover.
Fig. 4D is the perspective illustration of another inner cover.
Fig. 5A is the perspective illustration of another inner cover.
Fig. 5B shows the inside of another inner cover.
Fig. 5C shows the inside of another inner cover.
Fig. 6A is the top view of a rotary feather.
Fig. 6B is the side view of the rotary feather.
Fig. 7A is the top view of a rotary feather in another shape.
Fig. 7B is the side view of the rotary feather in another shape.
Fig. 8A is the top view of a rotary feather in another shape.
Fig. 8B is the side view of the rotary feather in another shape.
Fig. 9A is the top view of a rotary feather in another shape.
Fig. 9B is the side view of the rotary feather in another shape.
Fig. 10A is the top view of a rotary feather in another shape.
Fig. 10B is the side view of the rotary feather in another shape.
Fig. 11A is the perspective illustration of a tank.
Fig. 11B is the top view of the tank.
Figs. 12A~F show the structures of other tanks.
Fig. 13 is a flowchart showing the operation of the waste paper disintegration device.
Figs. 14A~H show the structures of other waste paper disintegration devices in the preferred embodiments of the present invention.
Fig. 15 shows another configuration of the waste paper fiber utilization system in the preferred embodiment of the present invention.
Fig. 16A is the top view of a rotary feather in another shape.
Fig. 16B is the side view of the rotary feather in another shape.
Fig. 16C is the view of the rotary feather in another shape, viewed from the direction of an arrow B.
Fig. 17A is the top view of a rotary feather in another shape.
Fig. 17B is the side view of the rotary feather in another shape.
Fig. 17C is the view of the rotary feather in another shape, viewed from the direction of an arrow C.
Fig. 18A shows the structure of the waste paper disintegration device on another preferred embodiment of the present invention.
Fig. 18B shows a cylindrical member.
Fig. 18C shows the structure of the waste paper disintegration device on another preferred embodiment of the present invention.
Fig. 18D shows another cylindrical member.
Fig. 19A shows the structure of the waste paper disintegration device on another preferred embodiment of the present invention.
Fig. 19B shows the structure of the waste paper disintegration device on another preferred embodiment of the present invention.
Fig. 20A shows the structure of the waste paper disintegration device on another preferred embodiment of the present invention.
Fig. 20B shows the structure of the waste paper disintegration device on another preferred embodiment of the present invention.
Fig. 21A shows the structure of the waste paper disintegration device on another preferred embodiment of the present invention.
Fig. 21B shows the structure of the waste paper disintegration device on another preferred embodiment of the present invention.
Fig. 22 shows the structure of the waste paper disintegration device on another preferred embodiment of the present invention.
Fig. 23 A shows the structure of a hole opening device.
Fig. 23B is the side view of the hole opening device.
Fig. 23C~H show spike-shape members.
Fig. 24A~D show examples of a storage unit.
Fig. 25A shows the structure of another tank.
Fig. 25B is the top view of another tank.
Fig. 26A is the top view of a rotary feather in another shape.
Fig. 26B is the side view of the rotary feather in another shape.
Fig. 27A is the top view of a rotary feather in another shape.
Fig. 27B is the side view of the rotary feather in another shape.
Fig. 28A~E show the examples in use of waste paper disintegrated by the waste paper disintegration device in the preferred embodiment, as cultural soil.
Fig. 29A~G show the examples in use of waste paper disintegrated by the waste paper disintegration device in the preferred embodiment, as cultural soil.
Fig. 30A~D show the examples in use of waste paper disintegrated by the waste paper disintegration device in the preferred embodiment, as cultural soil.
Fig. 31A~D show the examples in use of waste paper disintegrated by the waste paper disintegration device in the preferred embodiment, as a heat insulating material.
Fig. 32A~D show the examples in use of waste paper disintegrated by the waste paper disintegration device in the preferred embodiment, as a heat insulating material.
Fig. 33A~C shows the structures of the waste paper disintegration device in other preferred embodiments of the present invention.
Fig. 34A~F show the examples in use of waste paper disintegrated by the waste paper disintegration device in the preferred embodiment, as cultural soil.
Fig. 35A~J show the examples in use of waste paper disintegrated by the waste paper disintegration device in the preferred embodiment, as cultural soil.
Fig. 36 shows the examples in use of waste paper disintegrated by the waste paper disintegration device in the preferred embodiment, as cultural soil.
Fig. 37 shows another configuration of the waste paper fiber utilization system in the preferred embodiment of the present invention.

### Best Mode for Carrying Out the Invention

The preferred embodiments of the present invention are described below with reference to the drawings.

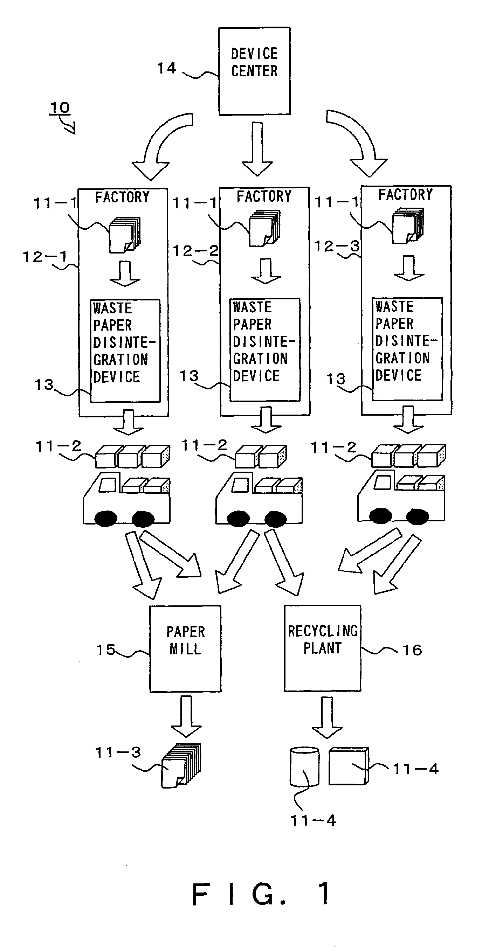

Fig. 1 shows the basic configuration of the waste paper fiber utilization system in the preferred embodiment of the present invention.

A waste paper fiber utilization system 10 shown in Fig. 1 comprises a plurality of factories 12 (12-1, 12-2, 12-3, ...), a waste paper disintegration device 13 for disintegrating waste paper 11-1, such as used computer paper, copied paper, facsimile paper, newspapers, leaflets, pamphlets, magazines, cardboard, corrugated cardboard and the like, discharged from the factory 12 into fibers 11-2, a device center 14 for performing the sales, rental, maintenance and the like, of the waste paper disintegration device 13, a paper mill 15 for recycling the fibers 11-2 to paper 11-3 and a recycling plant 16 for recycling the fibers 11-2 to products 11-4, such as heat insulating materials, cushions and the like. In the waste paper fiber utilization system 10, the device center 14 can also transport the fibers 11-2 to the paper mill 15, the recycling plant 16 and the like. Alternatively, a transportation company, which is not shown in Fig. 1, can transport the fibers 11-2 to the paper mill 15, the recycling plant 16 and the like. The fibers 11-2 shown in Fig. 1 are packed in a predetermined packing case or bag.

Next, the process of recycling waste paper 11-1 to paper 11-3 or a product 11-4 is described.

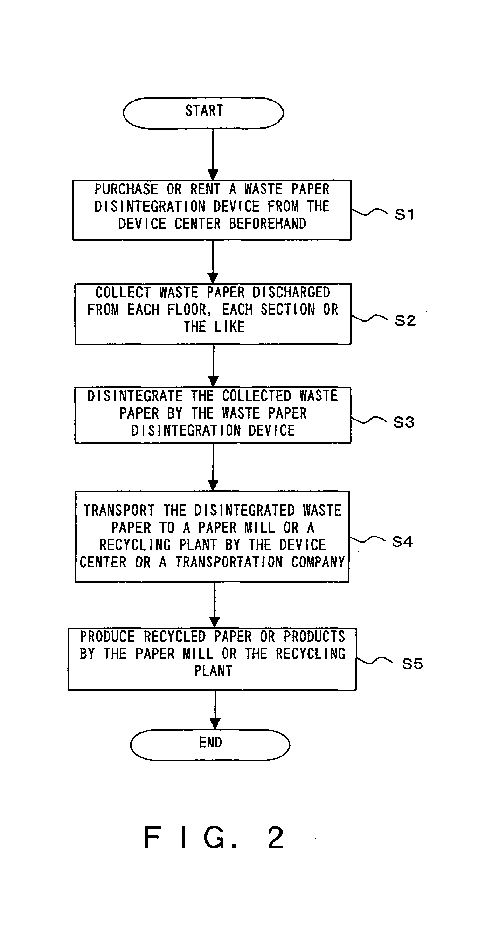

Fig. 2 is a flowchart showing the process of recycling waste paper 11-1 to paper 11-3 or a product 11-4.

Firstly, in step S~1, the factory 12 purchases or rents the waste paper disintegration device 13 from device center 14 beforehand. In this case, the maintenance personnel of the device center 14 regularly visits each factory 12 to provide the maintenance service of the waste paper disintegration device 13. The person in charge of transportation of the device center 14 provides the transportation service of the fibers 11-2 and the like. It is preferable for the selling price or rental fee of the waste paper disintegration device 13 to be determined based on expenses incurred when each factory 12 disposes waste paper.

Then, in step S2, the factory 12 collects waste paper 11-1 discharged from each floor, each section or the like in a predetermined collecting place. In this case, for example, in the factory 12, a working area for disintegrating waste paper 11-1 only can also be provided beforehand, the waste paper disintegration device 13 can also be installed in the working area beforehand, and the waste paper 11-1, such as used copied paper, newspapers and the like, collected from each floor, each section or the like, can also be transported to the working area.

Then, in step S3, the waste paper disintegration device 13 disintegrates the collected waste paper 11-1 into fibers 11-2.

Then, in step S4, the fibers 11-2 are packed in a predetermined carton box, a bag or the like, and are transported to the paper mill 15 or recycling plant 16 by the device center 14 or a transportation company.

Then, in step S5, the paper mill 15 recycles the fibers 11-2 to paper 11-3, such as cardboard, copied paper, notebooks, report paper, toilet paper, paper diapers, tissue-paper and the like. The recycling plant 16 recycles the mixture of the fibers 11-2 and the predetermined additive to products 11-4, such as decorative objects, horticultural soil, railway sleepers, heat insulating materials, incombustible materials, culture media for plants, smoke filters, waste liquid filters, oil absorbents and the like. The fibers 11-2 can also be used as cushions without any further process. When recycling the fibers 11-2 to paper 11-3, it is preferable to provide a process of decolorizing or bleaching the fibers 11-2 or the like. If the mixture of ink or the like in the fibers 11-2 is allowed when recycling the fibers 11-2 to a product 11-4, only a process of mixing the fibers 11-2 with an additive is needed.

Specifically, for example, by mixing the fibers 11-2 with cement and plaster, wall materials for buildings, decorative objects, containers, picture frames, artificial marble, sound-proof materials, culture media for plants and the like can be produced. When recycling the fibers 11-2 to a culture medium for plants, the fibers 11-2 can also be put in the flower-pot or the like without any further process and be used instead of soil, without mixing the fibers 11-2 with cement and plaster. In this case, by mixing it with fertilizer or the like, the fibers 11-2 can promote the growth of plants.

As described above, when recycling the fibers 11-2 to a culture medium for plants, the culture medium for plants can be made lighter, keep water longer and be made more air-permeable than soil generally used as a culture medium for plants. Since in a culture medium for plants produced from the fibers 11-2, the fibers intertwine with each other, and neither flow out of the flower-pot or the like, unlike soil, even if water is poured nor are scattered in the wind. Therefore, a culture medium for plants produced from the fibers 11-2 can also be used even in special places, such as a roof-top, veranda and the like of a building in an area where houses stand closely together, without bothering its neighborhood.

By mixing the fibers 11-2 with rubber, cushions can also be produced.

By mixing the fibers 11-2 with paste, fillings, ceramic powder, carbon powder, improved materials of sandy soil or the like, horticultural soil can also be produced.

By mixing the fibers 11-2 with copper wires, iron wires, cement and the like, railway sleepers can also be produced.

By mixing the fibers 11-2 with inorganic powder (flame-resistant materials, such as plaster, calcium carbonate, boron, magnesium carbonate, silica, alumina, zeolite and the like), heat insulating materials, incombustible materials, deodorants, preservatives and anti-rot materials can also be produced.

The fibers 11-2 can also be mixed with a humidity adjusting material.

Even if no additive is mixed with the fibers 11-2, cushions, the fibers 11-2 can be used as filters for eliminating waste oil, smoke, vapor, the particle substance of a diesel and the like, oil absorbents or carbonizing materials. When using the fibers 11-2 without any additive, the fibers 11-2 can be efficiently hardened tightly by applying pressure to them while rubbing them. When using the fibers 11-2 without any additive, the fibers 11-2 can also be used as filters for eliminating impurity contained in liquid or gas. When using the fibers 11-2 as a filter, the fibers 11-2 can also be mixed with grain husks, such as buckwheat husks, peanut husks or chaff, or paraffin. In this case, by mixing the fibers 11-2 with grain husks or paraffin, the grain husks or paraffin can prevent the fibers 11-2 from being condensed, and transmits only water while absorbing oil. By utilizing such a filter using the fibers 11-2 as a filter for a sewer, no sewer is blocked, and waste of oil or the like can be separated from sewage.

By mixing the fibers 11-2 with vegetable fibers, such as grass, cedar bark or the like, and also with boric acid, zeolite or the like, heat insulating materials, sound absorbing materials or anti-flame materials as building material can also be produced.

The fibers 11-2 can also be grained by a grainer.

By mixing the fibers 11-2 with a pigment of a predetermine color, the fibers 11-2 can be colored in a variety of colors.

By mixing the fibers 11-2 with an additive other than the above-mentioned or with the combination of the above-mentioned additives, a variety of recycled products 11-4 can be produced.

Next, the structure of the waste paper disintegration device 13 is described.

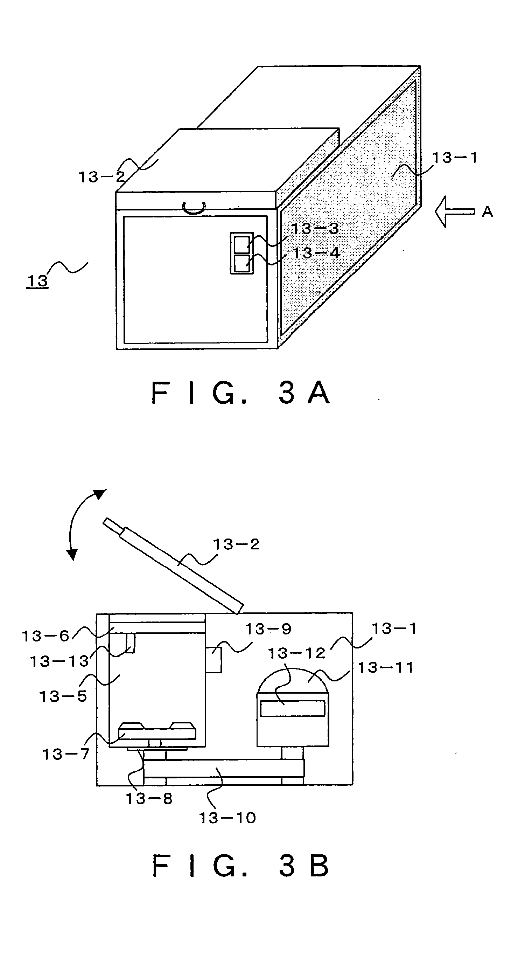

Fig. 3 shows the structure of the waste paper disintegration device 13. Figs. 3A and 3B are the appearance perspective illustration and the section view viewed from the direction of an arrow A, respectively, of the waste paper disintegration device 13.

In Fig. 3A, the waste paper disintegration device 13 comprises a main body 13-1, an outer cover 13-2, a power switch 13-3 and a start switch 13-4.

In Fig. 3B, the main body 13-1 comprises a tank 13-5 for storing waste paper 11-1, an inner cover 13-6 provided between the outer cover 13-2 and the tank 13-5, a rotary feather 13-7 provided with four feathers extending from its center, for colliding with the waste paper 11-1 by the four rotating feathers, a sensor 13-8, provided in the lower part of the tank 13-5, for measuring the weight of the waste paper 11-1 put to the tank 13-5, a water pouring unit 13-9 for pouring a predetermined weight of water into the tank 13-5, based on the measurement result of the sensor 13-8, a motor 13-11 for rotating the rotary feather 13-7 via a belt 13-10, a control unit 13-12 for controlling the rotation speed of the motor 13-11 and a projection 13-13 of a predetermined length (for example, approximately 5cm) provided on the inside of the inner cover 13-6.

The outer cover 13-2 can move in the direction of an arrow, and the inner cover 13-6 is of a built-in type. Even if the waste paper 11-1 is lifted by rotating the rotary feather 13-7, the projection 13-13 drops the waste paper 11-1 to efficiently disintegrate the waste paper 11-1.

The control unit 13-12 can also control rotation speed, rotation time and the amount of poured water, based on the type, combination and weight of the waste paper 11-1. In this case, the operator of the waste paper disintegration device 13 puts the type and combination of the waste paper 11-1 in the control unit 13-12 beforehand using an input unit, which is not shown in Fig. 3, and the control unit 13-12 controls rotation speed or rotation time, based on the input result.

The water pouring unit 13-9 can also jet water into the tank 13-5.

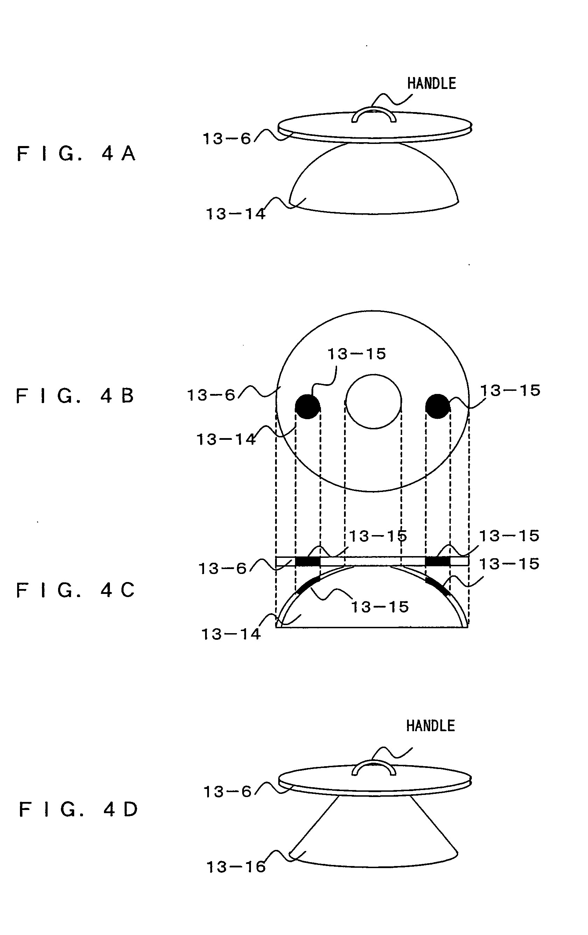

As shown in Fig. 4A, the inner cover 13-6 can also be provided with a bowl-shaped member 13-14 beneath it.

Fig. 4B is the view of the inner cover 13-16 with the bowl-shaped member 13-14, viewed from the bottom. Fig. 4C is its side view.

The bowl-shaped member 13-14 can be welded or bolted to the inner cover 13-6.

As shown in Figs. 4B and 4C, the inner cover 13-6 can also be provided with two holes 13-15 of a diameter of 15~25φ. The number of holes 13-15 is not limited. By providing the inner cover 13-6 with the holes 13-15, the status of the storage unit can be seen without opening the cover. A bar or the like can also be inserted in the storage unit through the holes 13-15 from the outside. Therefore, for example, if in the storage unit, the waste paper 11-1 rises and does not touch the rotary feather 13-7, the waste paper 11-1 can be pushed down to be efficiently disintegrated.

Alternatively, the inner cover 13-6 can also be provided structure that push down automatically the rising waste paper 11-1.

AS shown in Fig. 4D, the inner cover 13-6 can also be provided with a conic member 13-16 beneath it. In this case, it is preferable to provide such holes 13-15 in the respective predetermined positions of the inner cover 13-6 and conic member 13-16.

Alternatively, only the bowl-shaped member 13-14 or the conic member 13-16 can be used as the inner cover of the tank 13-5.

Alternatively, a mechanism for automatically moving the bowl-shaped member 13-14 or the conic member 13-16 vertically can be provided, and the waste paper 11-1 can be pushed down.

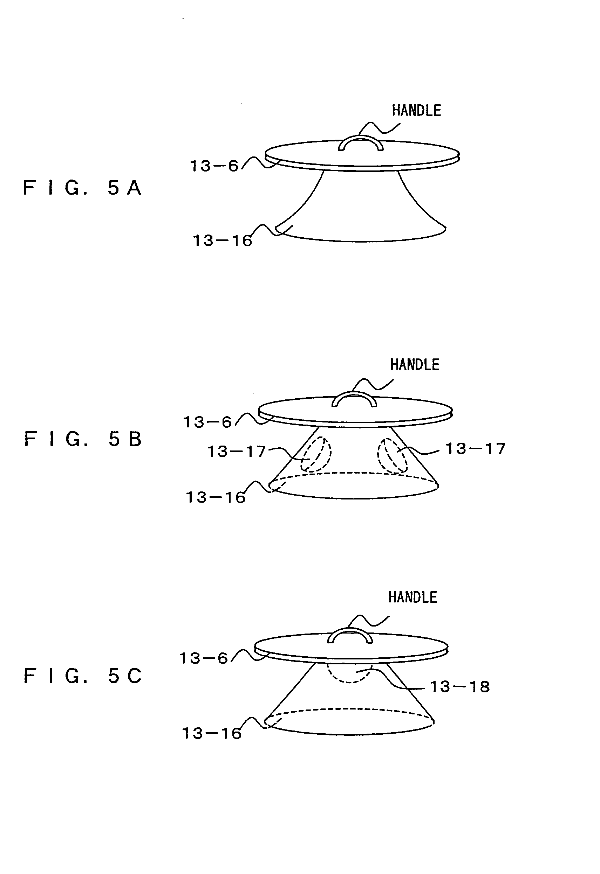

Figs. 5A, 5B and 5C show the conic members 13-16 in shapes different from that of the conic member 13-16 shown in Fig. 4.

Firstly, the conic member 13-16 shown in Fig. 5A is extended outward from its center as it goes downward (downward in Fig. 5), and its side surface is gently curved.

The conic member 13-16 shown in Fig. 5B has one or more projections on its inner side. In this case, if the waste paper collides with these projections 13-17 when the waste paper disintegration device 13 is driven, the rising waste paper can be pushed down (downward in Fig. 5).

The conic member 13-16 shown in Fig. 5C has projections 13-18 on the inner top surface. In this case, if the waste paper 11-1 collides with these projections 13-18 when the waste paper disintegration device 13 is driven, the rising waste paper can be pushed down (downward in Fig. 5).

Although in the above-mentioned waste paper disintegration device 13, the holes 13-15 through which the status of the tank 13-5 can be checked from the outside is provided for the inner cover 13-6, the holes 13-15 can be provided in any place of the waste paper disintegration device 13 (tank 13-5) as long as the status of the tank 13-5 can be checked from the outside of the waste paper disintegration device 13 (tank 13-5).

The holes 13-15 can also be provided with a transparent plate, such as a glass pane or the like in order to prevent the waste paper being disintegrated from going out of the holes 13-5.

Alternatively, the waste paper disintegration device 13 can be provided with a camera device (such as a video camera or the like) in order to check the status of the tank 13-5 of the waste paper disintegration device 13 from the outside.

If the waste paper disintegration device 13 is provided with holes or a camera device in order to check the status of the tank 13-5, an illumination device can also be further provided in the tank 13-5 in order to clearly check the status of the tank 13-5.

Thus, by providing the waste paper disintegration device 13 (tank 13-5) with a observation unit, such as the holes 13-5, a camera device or the like, to observe the inside of the tank 13-5, the waste paper can be disintegrated into desired fibers.

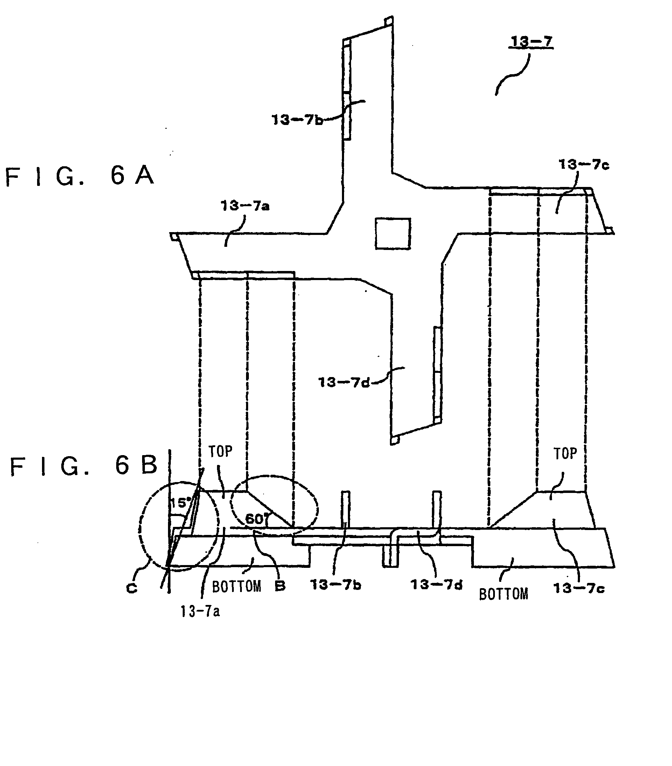

Figs. 6A and 6B are the top and side views, respectively, of the rotary feather 13-7.

Each of the rotary feathers 13-7 shown in Figs. 6A and 6B is provided with four feathers 13-7a~13-7d. By rotating the rotary feather 13-7, the waste paper 11-1 collides with the top or bottom of these four feathers 13-7a~13-7d to disintegrate the waste paper 11-1 into fibers. The material of the rotary feather 13-7 is not especially limited and iron, stainless steel, aluminum and other alloy can be used for it. The number of feathers of the rotary feather 13-7 is not limited as long as it is two or more.

The top near its center (a portion B shown in Fig. 6B) of each of the feathers 13-7a~13-7d is inclined at the angle of 60 degrees against the horizontal plane (the direction parallel to a paper surface shown in Fig. 6). The outer side (a portion C shown in Fig. 6B) of each of the feathers 13-7a~13-7d is inclined at the angle of 15 degrees against the vertical plane (the direction perpendicular to a paper surface shown in Fig. 6) . The inclination angles 60 and 15 degrees provided for each of the feathers 13-7a~13-7d are just examples, and the inclination angles are not limited as long as they are set in such a way that the feather can rotate smoothly without being clung to by the waste paper and also the waste paper is sufficiently integrated.

Thus, since the top near its center of each of the feathers 13-7a~13-7d is cut at a predetermined angle, no waste paper 11-1 clings to the portion even if the waste paper 11-1 rotates, and is pulled outward by centrifugal force generated by the rotation. Therefore, the waste paper 11-1 can be efficiently disintegrated. The outer side of each of the feathers 13-7a~13-7d is cut at a predetermined angle, the rotary feather 13-7 can rotate smoothly even if the waste paper 11-1 is inserted between each of the feathers 13-7a~13-7d and the side of the tank 13-5.

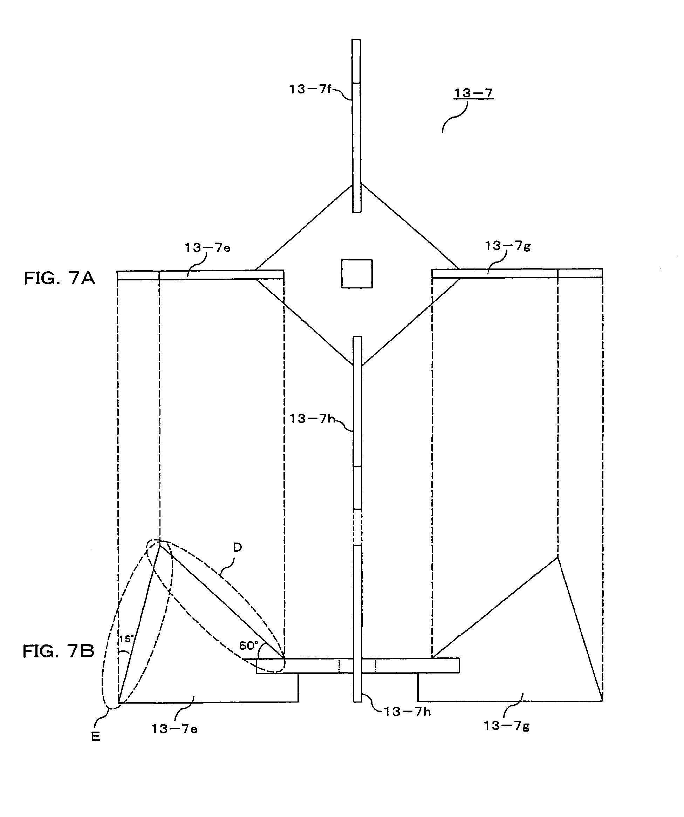

Figs. 7A and 7B are the top and side views, respectively, of the rotary feather 13-7 in another shape.

Each of the rotary feathers 13-7 shown in Figs. 7A and 7B is provided with four feathers 13-7e~13-7h. By rotating the rotary feather 13-7, the waste paper 11-1 collides with these four feathers 13-7e~13-7h to disintegrate the waste paper 11-1 into fibers. The material of the rotary feather 13-7 is not especially limited, and iron, stainless steel, aluminum and other alloy can be used for it. The number of feathers of the rotary feather 13-7 is not limited as long as it is two or more.

The top near its center (a portion D shown in Fig. 7B) of each of the feathers 13-7e~13-7h is inclined at the angle of 60 degrees against the horizontal plane. The outer side (a portion E shown in Fig. 7B) of each of the feathers 13-7e~13-7h is inclined at the angle of 15 degrees against the vertical plane. The inclination angles 60 and 15 degrees provided for each of the feathers 13-7e~13-7h are just examples, and the inclination angles are not limited as long as they are set in such a way that the feather can rotate smoothly without being clung to by the waste paper and also the waste paper is sufficiently integrated. If the top near its center and outer side of each of the feathers 13-7e~13-7h are kept at an angle of 60 degrees against the horizontal plane and at an angle of 15 degrees against the vertical plane, respectively, the size (height) of each of the feathers 13-7e~13-7h is not limited.

Thus, since the top near its center of each of the feathers 13-7e~13-7h is cut at a predetermined angle, no waste paper 11-1 clings to the portion even if the waste paper 11-1 rotates and is pulled outward by centrifugal force generated by the rotation. Therefore, the waste paper 11-1 can be efficiently disintegrated. The outer side of each of the feathers 13-7e~13-7h is cut at a predetermined angle, the rotary feather 13-7 can rotate smoothly even if the waste paper 11-1 is inserted between each of the feathers 13-7e~13-7h and the side of the tank 13-5.

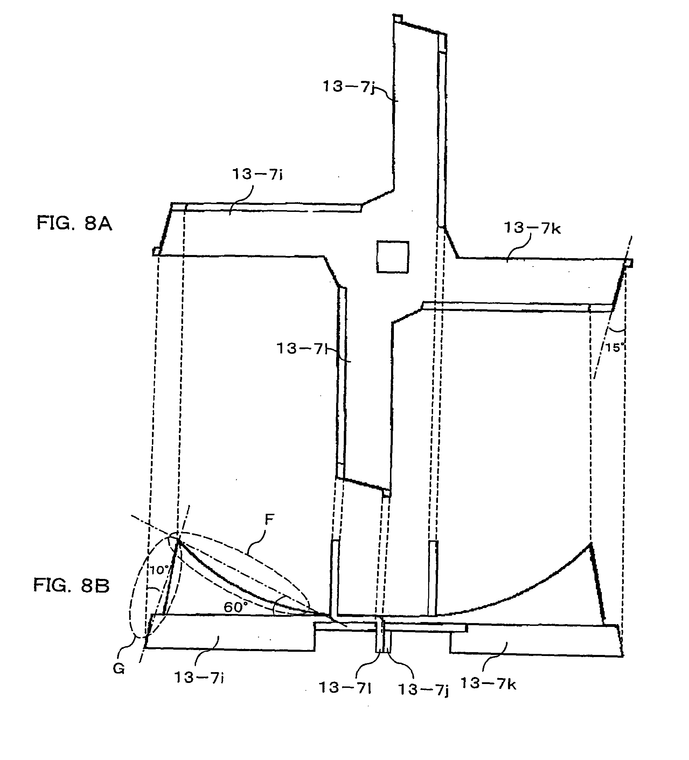

Figs. 8A and 8B are the top and side views, respectively, of the rotary feather 13-7 in another shape.

Each of the rotary feathers 13-7 shown in Figs. 8A and 8B is provided with four feathers 13-7i~13-71. By rotating the rotary feather 13-7, the waste paper 11-1 collides with these four feathers 13-7i~13-71 to disintegrate the waste paper 11-1 into fibers. The material of the rotary feather 13-7 is not especially limited, and iron, stainless steel, aluminum and another alloy can be used for it. The number of feathers of the rotary feather 13-7 is not limited as long as it is two or more.

The top near its center (a portion F shown in Fig. 8B) of each of the feathers 13-7i~13-71 is inclined at the angle of 60 degrees against the horizontal plane in a shape of almost a curve. The outer side (a portion G shown in Fig. 8B) of each of the feathers 13-7i~13-71 is inclined at the angle of 15 degrees against the vertical plane. The inclination angles 60 and 10 degrees provided for each of the feathers 13-7i~13-71 are just examples, and the inclination angles are not limited as long as they are set in such a way that the feather can rotate smoothly without being clung to by the waste paper and also the waste paper is sufficiently integrated. If the top near its center and outer side of each of the feathers 13-7i~13-71 are kept at an angle of 60 degrees against the horizontal plane and at an angle of 10 degrees against the vertical plane, respectively, the size (height) of each of the feathers 13-7i~13-71 is not especially limited.

The end of each of the feathers 13-7i~13-71 is cut at an angle of 15 degrees as shown in Fig. 8A.

Thus, since the top near the center of each of the feathers 13-7i~13-71 is cut at a predetermined angle in a shape of almost a curve, no waste paper 11-1 clings to the portion even if the waste paper 11-1 rotates and is pulled outward by centrifugal force generated by the rotation. Therefore, the waste paper 11-1 can be efficiently disintegrated. The outer side of each of the feathers 13-7i~13-71 is cut at a predetermined angle, the rotary feather 13-7 can rotate smoothly even if the waste paper 11-1 is inserted between each of the feathers 13-7i~13-71 and the side of the tank 13-5. Since each of the feathers 13-7i~13-71 is extended outward as it goes away from its center of the rotary feather 13-7, waste paper 11-1 collected around the inner side of the storage unit can be efficiently crushed by the rotating operation of the rotary feather 13-7.

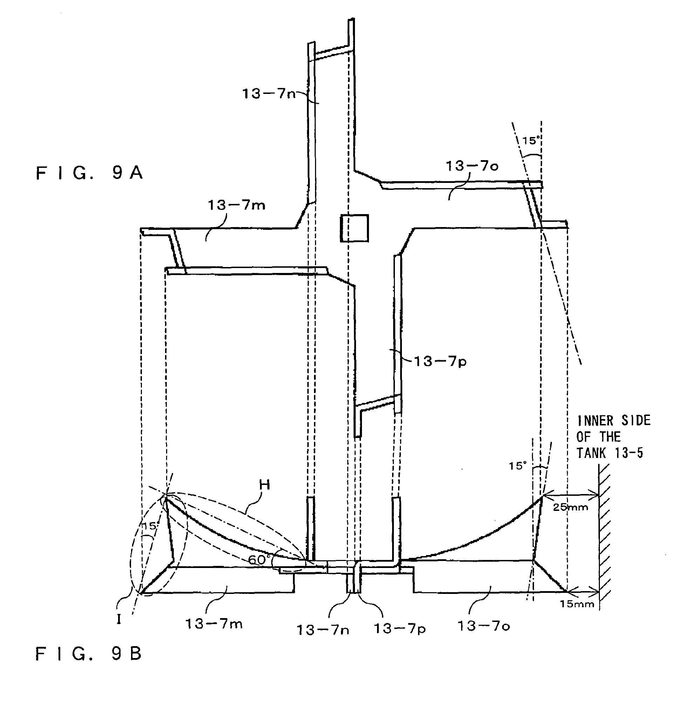

Figs. 9A and 9B are the top and side views, respectively, of the rotary feather 13-7 in another shape.

Each of the rotary feathers 13-7 shown in Figs. 9A and 9B is provided with four feathers 13-7m~13-7p. By rotating the rotary feather 13-7, the waste paper 11-1 collides with these four feathers 13-7m~13-7p to disintegrate the waste paper 11-1 into fibers. The material of the rotary feather 13-7 is not especially limited, and iron, stainless steel, aluminum and other alloy can be used for it. The number of feathers of the rotary feather 13-7 is not limited as long as it is two or more.

The top near its center (a portion H shown in Fig. 9B) of each of the feathers 13-7m~13-7p is inclined at the angle of 60 degrees against the horizontal plane in a shape of almost a curve. The outer side (a portion I shown in Fig. 9B) of each of the feathers 13-7m~13-7p is inclined at the angle of 15 degrees against the vertical plane. The inclination angles 60 and 15 degrees provided for each of the feathers 13-7m~13-7p are just examples, and the inclination angles are not limited as long as they are set in such a way that the feather can rotate smoothly without being clung to by the waste paper and also the waste paper is sufficiently integrated. If the top near its center and outer side of each of the feathers 13-7m~13-7p are kept at an angle of 60 degrees against the horizontal plane and at an angle of 15 degrees against the vertical plane, respectively, the size (height) of each of the feathers 13-7m~13-7p is not limited.

The end of each of the feathers 13-7m~13-7p is cut at an angle of 15 degrees as shown in Fig. 9A.

The outer side (portion I shown in Fig. 9B) of each of the feathers 13-7m~13-7p is cut in a V-character shape against the inner side of the tank 13-5.

Thus, since the outer side of each of the feathers 13-7m~13-7p is cut in a V-character shape, the waste paper 11-1 hardly clings to the outer side of each of the feathers 13-7m~13-7p and accordingly, the load of the rotary feather 13-7 can be reduced. Namely, since the amount of waste paper clinging to the rotary feather can be reduced, the load of the rotary feather can be reduced. Since the load of the rotary feather can be reduced, the life of the rotary feather can be extended.

It is preferable to install the rotary feather 13-7 with the feathers 13-7m~13-7p in the base of the tank 13-5 in such a way that the distance between the top end of each of the feathers 13-7m~13-7p and the inner side of the tank 13-5 and the distance between bottom end of each of the feathers 13-7m~13-7p and the inner side of the tank 13-5 may be approximately 25mm and 15mm, respectively.

Thus, since the top near its center of each of the feathers 13-7m~13-7p is cut at a predetermined angle, no waste paper 11-1 clings to the portion even if the waste paper 11-1 rotates and is pulled outward by its centrifugal force. Therefore, the waste paper 11-1 can be efficiently disintegrated. The outer side of each of the feathers 13-7m~13-7p is cut at a predetermined angle, the rotary feather 13-7 can rotate smoothly even if the waste paper 11-1 collects between each of the feathers 13-7m~13-7p and the side of the tank 13-5. Since each of the feathers 13-7m~13-7p is extended outward as it goes away from its center of the rotary feather 13-7, the waste paper collecting around the inner side of the storage unit can be efficiently crashed by the rotating operation of the rotary feather 13-7.

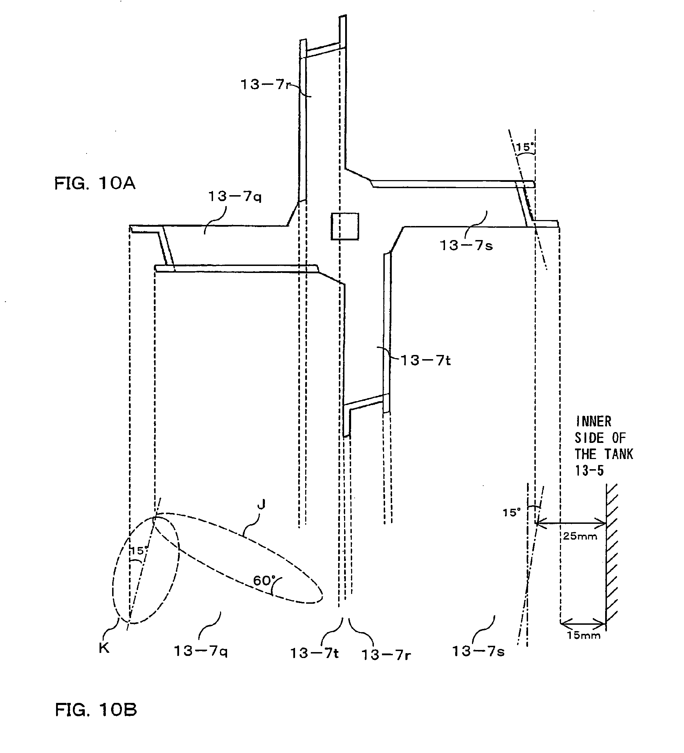

Figs. 10A and 10B are the top and side views, respectively, of the rotary feather 13-7 in another shape.

Each of the rotary feathers 13-7 shown in Figs. 10A and 10B is provided with four feathers 13-7q~13-7t. By rotating the rotary feather 13-7, the waste paper 11-1 collides with these four feathers 13-7q~13-7t to disintegrate the waste paper 11-1 into fibers. The material of the rotary feather 13-7 is not especially limited, and iron, stainless steel, aluminum and another alloy can be used for it. The number of feathers of the rotary feather 13-7 is not limited as long as it is two or more.

The top near its center (a portion J shown in Fig. 10B) of each of the feathers 13-7q~13-7t is inclined at the angle of 60 degrees against the horizontal plane. The outer side (a portion K shown in Fig. 10B) of each of the feathers 13-7q~13-7t is inclined at the angle of 15 degrees against the vertical plane. The inclination angles 60 and 15 degrees provided for each of the feathers 13-7q~13-7t are just examples, and the inclination angles are not limited as long as they are set in such a way that the feather can rotate smoothly without being clung to by the waste paper and also the waste paper is sufficiently integrated. If the top near its center and outer side of each of the feathers 13-7q~13-7t are kept at an angle of 60 degrees against the horizontal plane and at an angle of 15 degrees against the vertical plane, respectively, the size (height) of each of the feathers 13-7q~13-7t is not especially limited.

The end of each of the feathers 13-7q~13-7t is cut at an angle of 15 degrees as shown in Fig. 10A.

The outer side (portion J shown in Fig. 10B) of each of the feathers 13-7q~13-7t is cut in a V-character shape against the inner side of the tank 13-5.

Thus, since the outer side of each of the feathers 13-7q~13-7t is cut in a V-character shape, the waste paper hardly clings to the outer side of each of the feathers 13-7q~13-7t and accordingly, the load of the rotary feather 13-7 can be reduced. Namely, since the amount of waste paper clinging to the rotary feather can be reduced, the load of the rotary feather can be reduced. Since the load of the rotary feather can be reduced, the life of the rotary feather can be extended.

It is preferable to install the rotary feather 13-7 with the feathers 13-7q~13-7t in the base of the tank 13-5 in such a way that the distance between the top end of each of the feathers 13-7q~13-7t and the inner side of the tank 13-5 and the distance between the bottom end of each of the feathers 13-7q~13-7t and the inner side of the tank 13-5 may be approximately 25mm and 15mm, respectively.

Thus, since the top near its center of each of the feathers 13-7q~13-7t is cut at a predetermined angle, no waste paper 11-1 clings to the portion even if the waste paper 11-1 rotates and is pulled outward by its centrifugal force. Therefore, the waste paper 11-1 can be efficiently disintegrated. The outer side of each of the feathers 13-7q~13-7t is cut at a predetermined angle, the rotary feather 13-7 can rotate smoothly even if the waste paper 11-1 collects between each of the feathers 13-7q~13-7t and the side of the tank 13-5. Since each of the feathers 13-7q~13-7t is extended outward as it goes away from its center of the rotary feather 13-7, the waste paper collected around the inner side of the storage unit can be efficiently crashed by the rotating operation of the rotary feather 13-7.

Next, the waste paper disintegration device 13 provided with a plurality of rotary feathers 13-7 is described.

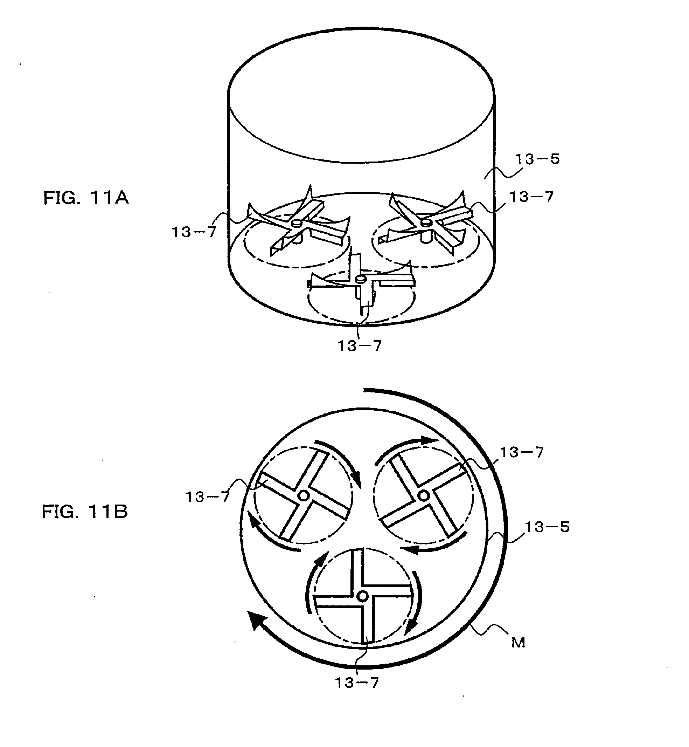

Fig. 11A and 11B shows the structure of the tank 13-5 of the waste paper disintegration device 13 provided with three rotary feathers 13-7. Figs. 11A and 11B is the perspective illustration and top view, respectively, of the tank 13-5. The arrow M shown in Fig. 11B indicates the flow of the waste paper when rotating each rotary feather 13-7.

As shown in Figs. 11A and 11B, three rotary feathers 13-7 are installed in the inner base of the tank 13-5 of the waste paper disintegration device 13 at predetermined intervals. For example, if the diameter of the base of the tank 13-5 and the diameter of each rotary feather 13-7 are 80cm and 32cm, respectively, it is preferable to set the difference between the end of the rotary feather 13-7 and the inner side of the tank 13-5, and the distance between the rotary feathers 13-7 to approximately 15mm and 5cm, respectively. Thus, each rotary feather 13-7 can rotate smoothly without being clung to by the waste paper.

Each of these three rotary feathers 13-7 can be rotated at the same or different rotation speed. The three rotary feathers 13-7 can be rotated in the same direction (clockwise or counter-clockwise) or in different directions.

Thus, since by providing a plurality of rotary feathers 13-7 in the inner base of the tank 13-5 of the waste paper disintegration device 13, the load of each rotary feather 13-7 is reduced to approximately a third, the load of the motor 13-11 for driving the rotary feather 13-4 can be reduced. Accordingly, the life of the motor 13-11 can be extended.

Since the driving load of the rotary feather 13-7 and motor 13-11 can be reduced, a large-sized waste paper disintegration device 13 capable of disintegrating, for example, several tens or several hundreds of kg of waste paper can be manufactured.

Each of the three rotary feathers 13-7 can also be driven and controlled respectively by three motors. The three rotary feathers 13-7 can also be installed on the inner side of the tank 13-5 at predetermined intervals. Alternatively, the three rotary feathers 13-7 can be installed below the inner cover 13-6.

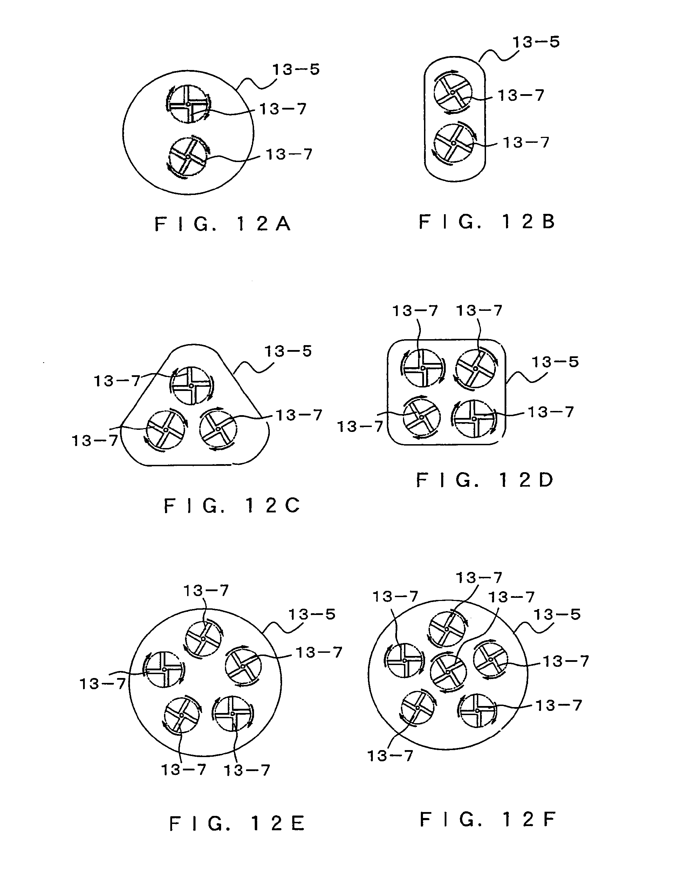

Figs. 12A~12F show the tank 13-5 and rotary feather 13-7 in other configurations and are the respective top views of the tanks 13-5.

Firstly, Fig. 12A shows two rotary feathers 13-7 installed in the circular base of the tank 13-5. The two rotary feathers 13-7 shown in Fig. 12A can be driven by one motor 13-11. Alternatively, two motors 13-11 can be provided, and each motor 13-11 can drive and control each rotary feather 13-7 separately.

Fig. 12B shows two rotary feathers 13-7 installed in the elliptic (or almost rectangular) base of the tank 13-5. In this case, the two rotary feathers 13-7 shown in Fig. 12B can also be driven by one motor 13-11 as in Fig. 12A. Alternatively, two motors 13-11 can be provided, and each motor 13-11 can drive and control each rotary feather 13-7 separately.

Thus, if two rotary feathers 13-7 are installed in the base of the tank 13-5, the area of the base can be made smaller than that of the tank 13-5 shown in Fig. 12A by using an elliptic (or almost rectangular) base. Thus, the size of the waste paper disintegration device 13 can be reduced.

Fig. 12C shows three rotary feathers 13-7 installed at the almost triangular base on the tank 13-5. In this case, the three rotary feathers 13-7 can be driven by one motor 13-11. Alternatively, three motors 13-11 can be provided, and each motor 13-11 can drive and control each rotary feather 13-7 separately.

Thus, if three rotary feathers 13-7 are installed in the base of the tank 13-5, the area of the base can be made smaller than that of the tank 13-5 shown in Fig. 11 by using an almost triangular base. Thus, the size of the waste paper disintegration device 13 can be reduced.

Fig. 12D shows four rotary feathers 13-7 installed in the almost square base of the cylindrical tank 13-5. In this case, the four rotary feathers 13-7 shown in Fig. 12D can be driven by one motor 13-11. Alternatively, four motors 13-11 can be provided, and each motor 13-11 can drive and control each rotary feather 13-7 separately.

Fig. 12E shows five rotary feathers 13-7

installed in the circular base of the cylindrical tank 13-5. In this case, the five rotary feathers 13-7 shown in Fig. 12E can be driven by one motor 13-11. Alternatively, five motors 13-11 can be provided, and each motor 13-11 can drive and control each rotary feather 13-7 separately.

Fig. 12F shows six rotary feathers 13-7 installed in the circular base of the cylindrical tank 13-5. In this case, the six rotary feathers 13-7 shown in Fig.12F can be driven by one motor 13-11. Alternatively, six motors 13-11 can be provided, and each motor 13-11 can drive and control each rotary feather 13-7 separately.

The shape of the tank 13-5 is not limited to those shown in Fig. 12, and the tank 13-5 can take a variety of shapes. Similarly, the number of the rotary feathers 13-7 is not limited to those shown in Fig. 12, and seven or more rotary feathers 13-7 can also be installed.

Next, the operation of the waste paper disintegration device 13 is described.

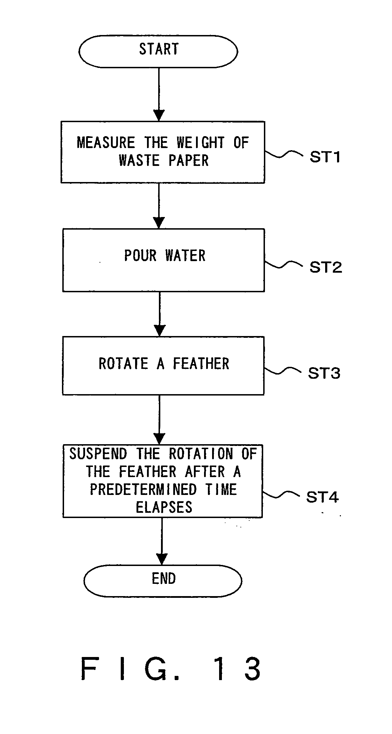

Fig. 13 is a flowchart showing the operation of the waste paper disintegration device 13.

Firstly, in step ST1, when the operator of the waste paper disintegration device 13 turns the power switch 13-3 on and puts waste paper 11-1 in the tank 13-5, the sensor 13-8 measures the weight of the waste paper 11-1.

Then, in step ST2, a predetermined amount of water corresponding to the weight of the waste paper 11-1 is poured into the tank 13-5. In this case, the water is poured in such a way that the waste paper 11-1 can be easily disintegrated, and the amount (weight) of water must be such that no water can be caused from the fibers 11-2 even when compressing the disintegrated fibers 11-2. Thus, by adding a suitable amount (weight) of water to the waste paper 11-1, the waste paper 11-1 can be disintegrated without any waste liquid. In other words, the waste paper 11-1 can be disintegrated at a yield of 100%. Dust and static electricity can be prevented from occurring when disintegrating the waste paper 11-1.

Then, in step ST3, the operator of the waste paper disintegration device 13 closes the inner cover 13-6 (only the bowl-shaped member 13-14 or conic member 13-16 also passable) and the outer cover 13-2, and turns the start switch 13-3 on, the rotary feather 13-7 rotates at a predetermined speed. In this case, the rotation speed of the rotary feather 13-7, for example, gradually increases as time elapses, and after a predetermined time elapses, the rotary feather 13-7 rotates at specific speed. In this case, when the operator closes the outer cover 13-2, the rotary feather 13-7 can automatically rotate at predetermined speed. The rotation speed of the rotary feather 13-7 can also be increased or decreased. The rotating direction of the rotary feather 13-7 can also be modified (reversed).

Then, in step ST4, after a driving time predetermined by the operator elapses, the rotation of the rotary feather 13-7 is suspended.

Table 1 shows the relationship between the weight of poured water and the weight of waste paper 11-1. Disintegration is actually performed in each case where the amount (weight) of poured water is 0, 0.2. 0.3, 0.5. 0. 6, 0. 65, 0.7, 0. 8, 1 or 1.3 against 1kg of waste paper 11-1, and Table 1 shows the disintegration status of the waste paper 11-1 in each case. The 1kg of waste paper 11-1 used for this experiment is composed of 250g of used copied paper (for example, 58 pieces of A4 copied paper), 250g of newspapers, 250g of leaflets and 250g of magazines (paste- and staple-bound ones also passable) . The rotation time of the rotary feather 13-7 is 3~6 minutes.

**Table 1**

| Amount of added water against 1kg of waste paper (kg) | Disintegration status |
|---|---|
| 0 | Not disintegrable |
| | Much dust |
| 0.2 | Difficult to disintegrate |
| | Roughly integrated |
| 0.3 | Difficult to disintegrate |
| | Roughly integrated |
| | Partially feather-like |
| 0.5 | Disintegrable |
| | Feather-like |
| 0.6 | Disintegrable |
| | Disintegrated into fibers |
| 0.65 | Disintegrable |
| | Satisfactorily disintegrated into fibers |
| 0.7 | Disintegrable |
| | Satisfactorily disintegrated into fibers |
| 0.8 | Disintegrable |
| | Disintegrated into fibers |
| 1 | Disintegrable |
| | Dumpling-like |
| 1.3 | Disintegrable |
| | Dumpling-like |
| | Watery |

As clear from Table 1, when the amount of added water is 0.6~1.0kg against 1kg of waste paper 11-1, the waste paper 11-1 can be disintegrated, and more particularly when the amount of added water is 0.65kg, the waste paper 11-1 can be most satisfactorily disintegrated into fibers.

If the amount of added water is insufficient (0~0.3 kg of water), sometimes dust and static electricity occurs, sometimes waste paper 11-1 cannot be disintegrated into fibers and sometimes fibers are still too rough. Conversely, if the amount of added water is too much (1 kg or more of water), the waste paper becomes dumpling-like, can be disintegrated, but cannot be disintegrated into fibers.

If waste paper is disintegrated for three minutes, the waste paper cannot be read, and information can be prevented from leaking. If waste paper is disintegrated for six minutes, the waste paper can be disintegrated into fibers. If waste paper is disintegrated for ten minutes, the waste paper can be disintegrated into cellulose.

Table 2 shows the amount (weight) of added water in the case where each of 1 kg of used copied paper, 1 kg of newspapers, 1 kg of leaflets and 1 kg of magazines is most satisfactorily disintegrated by rotating the rotary feather 13-7 for six minutes.

**Table 2**

| Type of waste paper | Amount of added water in the most satisfactory disintegration status (kg) |
|---|---|
| Used copied paper | 0.6 |
| Newspapers | 0.8 |
| Leaflet | 0.65 |
| Magazine | 0.65 |

As described above, although the amount of water contained in the waste paper 11-1 somewhat varies depending on the type of waste paper 11-1, it is preferable for the amount of added water equivalent to 60~100 percent of the weight of the waste paper 11-1 to be disintegrated. More particularly, when disintegrating a plurality of types of waste paper, it is preferable for the amount of added water equivalent of 65% of the weight of the waste paper to be disintegrated. Specifically, for example, if waste paper 11-1 is put in the tank 13-5 in the waste paper disintegration device 13 and the sensor 13-8 measures its weight to be 1kg, it is preferable for the water pouring unit 13-9 to pour 600~1,000g of water into the tank 13-5.

As shown in Table 2, if only newspapers are disintegrated or if the ratio of newspapers is large, little bit more water must be added.

For example, if one waste paper disintegration device 13 disintegrates 1 kg of A4 copied paper (specifically 232 pieces of A4 copied paper) for three minutes, it takes 0.39 seconds for the waste paper disintegration device 13 to disintegrate one piece of A4 copied paper.

Ten waste paper disintegration devices 13 can disintegrate 200 kg of A4 copied paper in one hour.

As described above, since according to the waste paper fiber utilization system 10 of this preferred embodiment, in each factory 12, the waste paper disintegration device 13 provided by the device center 14 can disintegrate a large amount of discharged waste paper 11-1 into raw materials for recycled paper or recycled products without using a shredder, the secret information described in the waste paper 11-1 can be prevented from leaking, and the waste paper 11-1 can be utilized as resource materials at low cost.

Since according to the waste paper fiber utilization system 10, the disintegration process of waste paper 11-1, traditionally performed in the paper mill 15 or recycling plant 16 can be performed in the factory 12, the process ranging from the collection of waste paper 11-1 to the recycling of paper 11-3 or products 11-4 can be simplified.

Specifically, for example, if the fibers 11-2 are recycled to a recycled product 11-4 without decolorizing the ink or the like of the disintegrated fibers 11-2, the fibers 11-2 disintegrated by the waste paper disintegration device 13 can be directly recycled to the recycled product 11-4. Therefore, the process ranging from the collection of the waste paper 11-1 to the recycling of the recycled product 11-4 can be simplified.

Since the waste paper disintegration device 13 in this preferred embodiment makes the waste paper contain water corresponding to 60~100% of the waste paper in weight and disintegrates the water-containing waste paper 11-1 by rotating the rotary feather 13-7 provided with a plurality of feathers, the waste paper can be completely disintegrated without using a large amount of water unlike the traditional moisture type waste paper disintegration method. Thus, the occurrence of waste liquid (dirt mud) can be prevented. According to the result of the experiment, waste paper 11-1 can be satisfactorily disintegrated by making the waste paper contain water equivalent of 60~100% of the waste paper 11-1 in weight and disintegrating the water-containing waste paper 11-1.

For example, 1 kg of waste paper 11-1 can be disintegrated in a short time of 3~6 minutes. Since the above-mentioned waste paper disintegration device 13 is neither complex nor large like the traditional waste paper disintegration device, the installation space can be saved.

Since a large amount of secret documents discharged from factories, public offices or universities can be disintegrated at one time, information leak can be prevented more easily than the traditional method of cutting waste paper 11-1 piece by piece by a shredder or the like.

The type of waste paper 11-1 disintegrated by the waste paper disintegration device 13 is not limited to the above-mentioned waste paper 11-1, such as newspapers, used copied paper and the like, and the waste paper disintegration device 13 can also be applied to waste paper other than the above.

Although in the waste paper disintegration device 13 of the above-mentioned preferred embodiment, the sensor 13-9 measures the amount (weight) of waste paper 11-1 inputted to the tank 13-5 and a predetermined amount (weight) of water is poured into the tank 13-5, based on the amount of the waste paper 11-1, the operator of the device 10 can also pour the predetermined amount of water. In that case, the operator can also measure the weight of the waste paper 11-1 and prepare water based on the measured weight of the waste paper 11-1.

Although in the waste paper disintegration device 13 of the above-mentioned preferred embodiment, firstly a specified amount (60~100%) of water is poured at one time, at first a specific amount (such as the minimum specified amount of 60%) of water is poured and the remaining amount can also be gradually poured while rotating the rotary feather 13-7.

Alternatively, a vehicle mounting the above-mentioned waste paper disintegration device 13 is dispatched to a factory, a public office or a university, and a system for disintegrating waste paper can be built on the spot. In this case, its fee can vary depending on a processing time needed to disintegrate the waste paper. Thus, since the waste paper can be made unreadable in the presence of the operator, the reliability of the system can be improved.

### <Other preferred embodiments>

The present invention is not limited to the above-mentioned preferred embodiment, and variations and modifications are possible in the range set forth in each claim. For example, the following variations and modifications are possible.

(1) By installing the above-mentioned waste paper disintegration device 13 in a school, secret documents (such as test paper, etc.), newspapers, magazines, copied paper, post cards, envelopes, carton boxes and other waste paper discharged from the school can be disintegrated. Making school students or the like disintegrate such secret documents or other waste paper using the waste paper disintegration device 13 can be used as a part of education for environmental problems. Disintegrated waste paper cellulose can also be used as raw materials when recycling products as a part of lessons.

(2) By installing the waste paper disintegration device 13 in a shopping mall, secret documents and other waste paper (such as old newspaper, copied paper and the like) discharged from each store of the shopping mall and each home around the shopping mall can be disintegrated. Specifically, the secret documents and other waste paper can be disintegrated using the waste paper disintegration device 13, and waste paper cellulose can be obtained. By processing the waste paper cellulose, the fibers can be recycled to products. Alternatively, the waste paper cellulose can be exchanged with recycled products produced by the recycling plant or the like. Thus, the local environment of the shopping mall provided with the waste paper disintegration device 13 can be improved.

(3) By installing the waste paper disintegration device 13 in a complex office building which a plurality of enterprises and the like occupies or the like, secret documents and other waste paper (such as old newspaper, copied paper and the like) discharged from each enterprise can be disintegrated. If waste paper cellulose is obtained by disintegrating the secret documents and other waste paper using the waste paper disintegration device 13, the waste paper cellulose can be exchanged with recycled products.

(4) As recycled products produced using waste paper cellulose disintegrated by a school, a shopping mall or a complex office building, there are, for example, materials for stuck paintings, color wrapping materials, frying oil absorbents, flower-pots, materials mixed with plaster or cement, brick blocks, building blocks, bronze, cardboard and the like.

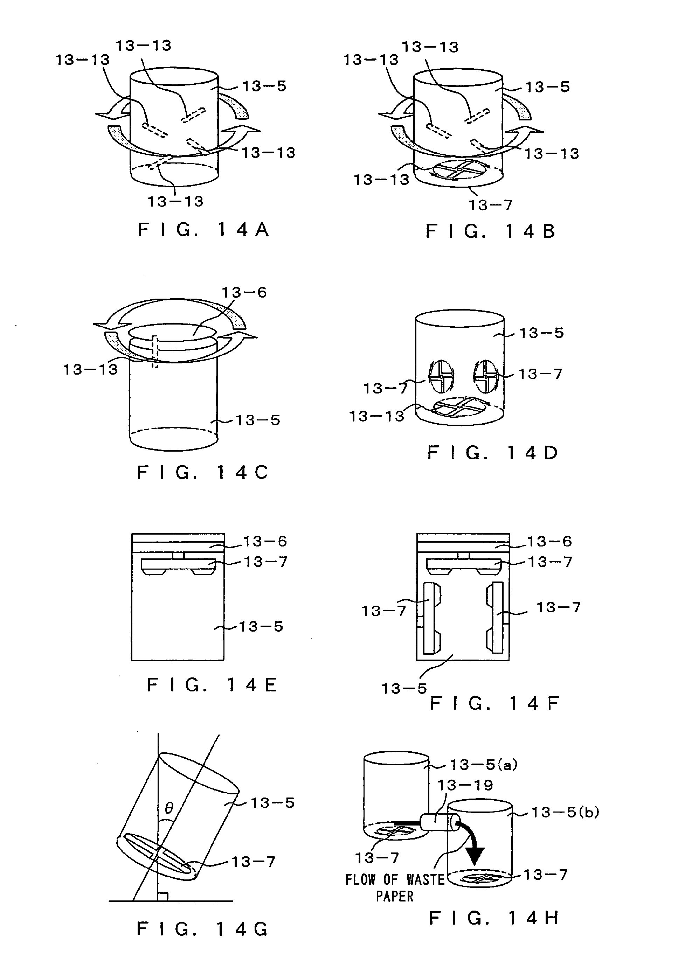

(5) The waste paper disintegration device 13 of the above-mentioned preferred embodiments is provided with one or more rotary feathers 13-7 in the base of the tank 13-5, and waste paper is disintegrated by rotating the rotary feathers 13-7. However, as shown in Fig. 14A, one or more projections can also be provided on the inner side of the tank 13-5, and waste paper can also be disintegrated by rotating the side of the tank 13-5 and making waste paper collide with each other.

(6) Alternatively, as shown in Fig. 14B, the waste paper disintegration device 13 can disintegrate waste paper by rotating the side of the tank 13-5 provided with one or more projections on the inner side and also rotating the rotary feathers 13-7 installed in the base of the tank 13-5.

(7) Alternatively, as shown in Fig. 14C, the waste paper disintegration device 13 can be provided with projections on the inside of the inner cover 13-6 of the tank 13-5, and can also disintegrate waste paper by rotating the inner cover 13-6.

(8) Alternatively, as shown in Fig. 14D, the waste paper disintegration device 13 can be provided with one or more rotary feathers 13-7 on the inner side of the tank 13-5 to disintegrate waste paper. Thus, waste paper is collected around the inner side of the storage unit due to the rotation of the rotary feathers. Waste paper can be efficiently disintegration.

(9) Alternatively, as shown in Fig. 14E, the waste paper disintegration device 13 can be provided with one or more rotary feathers 13-7 below the inner cover 13-6 of the tank 13-5, and can disintegrate waste paper by the rotary feathers 13-7.

(10) Alternatively, as shown in Fig. 14F, the waste paper disintegration device 13 is provided with the rotary feathers 13-7 on the inner side and below the inner cover 13-6, of the tank 13-5, can disintegrate waste paper by the rotary feathers 13-7. Thus, compared with a case where the rotary feathers are provided only on the inner side of the storage unit, the waste paper can be more efficiently disintegrated.

(11) Alternatively, as shown in Fig. 14G, the tank 13-5 and rotary feathers 13-7 are inclined in such a way that an angle θ formed by a center shaft connecting its center point of the base of the tank 13-5 with its center point of the opening, and a shaft perpendicular to the ground can become a predetermined value. Thus, since waste paper is concentratedly collected in the lower part of the tank 13-5, waste paper can be efficiently disintegrated.

(12) Alternatively, as shown in Fig. 14H, the waste paper disintegration device 13 can be provided with a plurality of the tanks 13-5. In the waste paper disintegration device 13 shown in Fig. 14H, one tank 13-5 (for example, tank 13-5(a)) is positioned higher than the other tank 13-5 (for example, tank 13-5 (b)), and a pipe 13-19 is provided between the lower part of the tank 13-5 (a) and the upper part of the tank 13-5 (b) to pass waste paper. For example, in the waste paper disintegration device 13 shown in Fig. 14H, firstly the tank 13-5 (a) roughly disintegrates waste paper, and then the tank 15-5(b) disintegrates the roughly disintegrated waste paper into desired fibers. Thus, since the entire load of the rotary feathers 13-7 can be distributed to each rotary feather, the load of each rotary feather 13-7 can be reduced, and accordingly, the life of each rotary feather 13-7 can be extended. The number of tanks 13-5 provided for the waste paper disintegration device 13 can be three or more. By using different types of rotary feathers 13-7 provided for each tank 13-5, waste paper can be efficiently disintegrated.

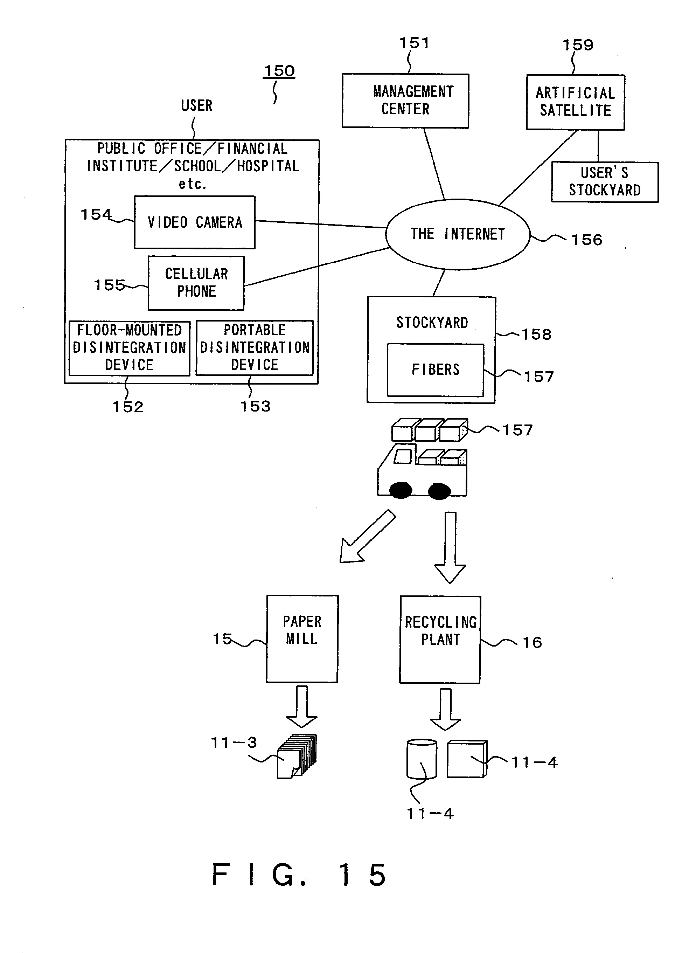

(13) The waste paper fiber utilization system 150 shown in Fig. 15 can also be used.

As shown in Fig. 15, in the waste paper fiber utilization system 150, the waste paper disintegration device 13 is rented to a public office, a financial institute, a school, a hospital or the like, which are its users, for a specific period together with an operator skilled in the operation of the waste paper disintegration device 13, and a rental fee is collected from the public office, financial institute, school, hospital or the like.

A management center 151 receives video data from a video camera 154 (which can convert a picture into digital data and transmit it) or a cellular phone with a camera 155 installed near a floor-mounted waste paper disintegration device 152 that is always installed in a public office, a financial institute, a school, a hospital or the like, which are its users, or a portable waste paper disintegration device 153 mounted in vehicle or the like to monitor the disintegration work of waste paper in the floor-mounted disintegration device 152 or portable disintegration device 153 via the Internet 156. Then, the management center 151 transmits the video data to the terminal device (computer or the like) of the user via the Internet 156.

The management center 151 also receives fiber data indicating the status of fibers 157 disintegrated by the floor-mounted disintegration device 152 or portable disintegration device 153 (the amount, quality and the like of fibers 157 that are collected from a public office, a financial institute, a school, a hospital or the like and stored in a stockyard 158), from a terminal device installed in the stockyard 158 via the Internet 156.

The management center 151 also transmits data that instructs the transportation of the fibers 157 to a paper mill 15 or a recycling plant 16 by a truck or the like to the computer, which is not shown in Fig. 15, of a distribution center in the stockyard 158 via the Internet 156, based on the fiber data transmitted from the terminal device of the stockyard 158.

The management center 151 also receives video data transmitted from another user' s video camera 154 or the like and fiber data transmitted from another stockyard 158, from a satellite 159 via the Internet 156.

The fibers 157 transported to the paper mill 15 or recycling plant 16 can be recycled to the recycled paper 11-3 and the recycled products 11-4, such as toilet paper, tissue paper, copy paper, smoke filters, waste liquid filters, construction materials, sound-proof materials, odor-proof materials, cardboard, flower-pots, tiles, bricks as in the above-mentioned waste paper fiber utilization system 10. Since the respective recycling methods of the recycled paper 11-3 and the recycled product 11-4 are the same as those described above, their descriptions are omitted here. In the waste paper fiber utilization system 150, the management center 151 can also purchase the fibers 157 disintegrated by the floor-mounted disintegration device 152 or portable disintegration device 153 of a user. Alternatively, the fibers 157 can be exchanged with a variety of discount coupons, a variety of coupon tickets, or a waste paper recycled product coupon.

The management center 151 is not limited to the above-mentioned preferred embodiments, and can be any stand-alone device, any system or integrated device composed of a plurality of devices or any system processing data via network, such as a LAN, a WAN or the like.

The management center 151 can also realized by a system composed of a central processing unit (CPU), memory, such as read-only memory (ROM), random-access memory (RAM), etc., an input device, an output device, an external storage device, a medium driving device, a portable storage device and a network connecting device which are connected to each other by a bus is provided to the management center 151. Specifically, memory, such as ROM, RAM, etc., an external storage device or a portable storage medium on which is recorded the program code of software for realizing the system of the above-mentioned preferred embodiment, which are connected to each other by a bus is provided to the management center 151, and the computer of the management center 151 can also read and execute the program code.

In this case, the program code read from such a storage medium realizes the new function of the present invention, and the portable storage medium or the like on which is recorded the program code constitutes the present invention.

For the portable storage medium for providing such a program code, a flexible disk, a hard disk, an optical disk, a magneto-optical disk, compact disk (CD)-ROM, a CD-recordable(R), digital versatile disk (DVD)-ROM, DVD-RAM, A magnetic tape, a non-volatile memory card, a ROM card, a variety of storage media recording data via a network connecting device for electronic mail, personal communication or the like (that is, a communication circuit) can be used.

A computer can realize the function of the above-mentioned preferred embodiment by executing the program code read into memory. Alternatively, an operation system (OS) operating on the computer or the like can realize the function of the above-mentioned preferred embodiment by performing a part of the actual process or the entire process.

Furthermore, after the program code read from the portable storage medium is written onto memory provided in a function extension board inserted in the computer or a function extension unit connected to the computer, a CPU or the like provided for the function extension board or unit can realize the function of the above-mentioned preferred embodiment by performing a part of the actual process or the entire process based on the instruction of the program code.

Next, the respective examples of the actual working hours, fee and disintegration capacity of the portable waste paper disintegration device 152 and the rental period, rental fee and disintegration capacity of the floor-mounted waste paper disintegration device 153 are described.

The actual working hours of the portable waste paper disintegration device 153 are classified, for example, into three periods of an "AM/PM period (half-day period) ", an "AP period (one-day period) " and a "two-day period".

In the "AM/PM period", for example, the actual working hours of a dispatched operator is set to less than 2.5 hours in the morning or afternoon.

In the "AP period", for example, the actual working hours of a dispatched operator is set to less than 5 hours in the morning and afternoon.

In the "two-day period", for example, the actual working hours of a dispatched operator is set to 11 hours between 10 am of the first day until pm 4 of the second day.

The rental period of the floor-mounted waste paper disintegration device 152 is classified for example, into three periods of a "one-week period", a "two-week period" and a "three-week period".

In the "one-week period", for example, it is set that the actual working hours of a dispatched operator are from 10 am until 4 pm in the first through fifth days, and that the transportation of the fibers 157 starts from 4 pm.

In the "two-week period", for example, it is set that the actual working hours of a dispatched operator are from 10 am until 4 pm in the first through tenth days, and that the transportation of the fibers 157 starts from 4 pm.

In the "three-week period", for example, it is set that the actual working hours of a dispatched operator are from 10 am until 4 pm in the first through fifteenth days, and that the transportation of the fibers 157 starts from 4 pm.

Furthermore, a "four-week period", an "eight week period", a "12-week period" and a "24-week period" can also be set.

The fees of the portable waste paper disintegration device 153 can be, for example, set as follows. For example, in the case of one dispatched operator, the "AM/PM period", "AP period" and "two-day period" can be set to 50, 000 yen, 80, 000 yen and 150, 000 yen, respectively, for the first set. In the case of two sets (if one of the two sets is alternatively operated), the fee of the portable waste paper disintegration device 153 of the second set can also be 60% of the fee of the first set.

The rental fees of the floor-mounted waste paper disintegration device 152, for example, in the case of one dispatched operator, the "one-week period", "two-week period", "three-week period", "four-week period", "eight-week period", "12-week period" and "24-week period" can be set to 250, 000 yen, 380, 000 yen, 500,000 yen, 600,000 yen, 1,140,000 yen, 1,710,000 yen and 3,240,000 yen, respectively, for the first set. The rental fee of periods of 24 weeks or more can be set to an amount obtained by subtracting 40,000 yen from the above-mentioned fee corresponding to hours in excess of 24 weeks. In the case of two sets (if one of the two sets is alternatively operated), the fee of the floor-mounted waste paper disintegration device 152 of the second set can also be 60% of the fee of the first set.

The disintegration capacity of the portable waste paper disintegration device 153 and that of the floor-mounted one 152 are the same. The disintegration capacity of the first waste paper disintegration device is as follows. In the case of the "AP/PM period", "AP period" and "two-day period", 50kg/11,600 pieces, 100kg/23, 200 pieces and 220kg/51, 040 pieces of A4 copied paper can be disintegrated. In the case of "one-week period", 360kg of A4 copied paper for six hours per day for three days and 200kg for five hours per day for the remaining two days, 560kg/129,920 pieces in total of A4 copied paper can be disintegrated. In other words, 20kg/4,640 pieces of A4 copied paper can be disintegrated per hour (in the case where 1kg of A4 copied paper is disintegrated for three minutes, which is repeated 20 times).

In the case of two waste paper disintegration devices, the disintegration capacity of each of the floor-mounted waste paper disintegration device 152 and portable waste paper disintegration device 153 for the second set becomes 180% of that of the first set.

The above-mentioned actual working hours, fee and disintegration capacity of the portable waste paper disintegration device 152 and the rental period, rental fee and disintegration capacity of the floor-mounted waste paper disintegration device 153 in the waste paper fiber utilization system 150 are just examples, and can be variably modified depending on an object, a configuration or the like.

Thus, since a user can take a picture of all the operations of the waste paper disintegration device 13 and all the operations of an operator by the video camera 154 or cellular phone with a camera 155 and monitor the status of the waste paper disintegration work of video data transmitted from the video camera 154 or cellular phone with a camera 155 via Internet 156, there is no need to attend the waste paper disintegration work on site, and accordingly, the user can monitor the status of the waste paper disintegration work while doing routine work.

(14) Freshness keeping materials or odor-proof materials can also be produced by mixing the fibers 11-2 disintegrated by the waste paper disintegration device 13 with zeolite and putting the mixture in an air permeable bag or container made of a natural material (such as one obtained by opening holes in Japanese paper or craft paper, a bag made of cotton or the like, etc.). Traditionally, in order to keep the fibers fresh, tourmaline, zeolite, alumina, titanium oxide, calcium oxide or the like is directly coated on the inside of a container or silica gel carbon powder or the like is directly put in a bag.

A mixture of the fibers 11-2 and zeolite absorbs gas components, such as ethylene, aldehyde, alcohol and the like that are discharged from vegetables and fruits, seeds, processed food, fish, meat and the like.

Thus, since the mixture of the fibers 11-2 and zeolite suppresses overheat, prevents quality degradation, prevents odor and so on, a bag or a container including the mixture of the fibers 11-2 and zeolite can keep vegetables and fruits, fish, meat and the like fresh at low cost and environment ally-friendly when they are put in the bag or container.

For example, zeolite can also be coated on one surface of a piece of cloth made of non-woven fabric, cotton or the like using adhesives or the like, and the fibers 11-2 can also be put in a bag made of the piece of cloth with the surface on which zeolite is coated inside. Thus, by putting vegetables and fruits, fish and the fibers 11-2 in a bag on the inside of which zeolite is coated, the vegetables and fruits and fish can be kept fresh. Furthermore, odor discharged from the vegetables and fruits and fish can be absorbed by the zeolite and fibers 11-2.

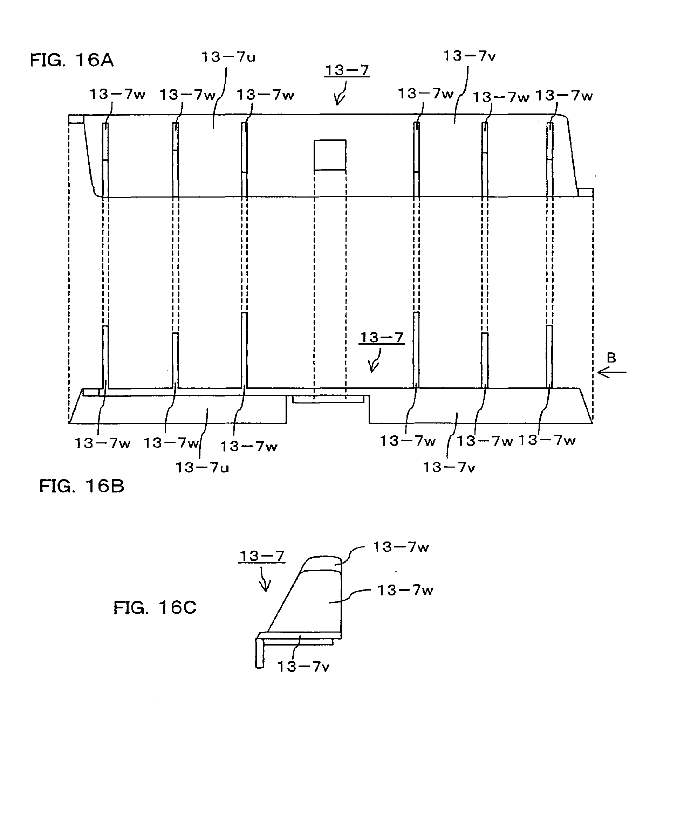

(15) Fig. 16 shows another structure of the rotary feather 13-7. Figs. 16A, 16B and 16C is the top view, the side view and the view viewed from the direction of an arrow B, respectively, of the rotary feather 13-7.

The rotary feather 13-7 shown in Figs. 16A through 16C is provided with two feathers 13-7u and 13-7v each extending from its center. As shown in Figs. 16A through 16C, each of the feathers 13-7u and 13-7v is provided with three collision plates 13-7w for colliding with the waste paper 11-1 and colliding with it, on it. The collision plates 13-7w are provided perpendicular to the feathers 13-7u and 13-7v. When the rotary feather 13-7 rotates, the waste paper 11-1 collides with these two feathers 13-7u and 13-7v and the collision plates 13-7w and is disintegrated into fibers. The material of the rotary feather 13-7 is not especially limited to iron, stainless steel, aluminum, another alloy, resin or the like. The number of the collision plates 13-7w provided on the feathers 13-7x and 13-7y is not limited to three.

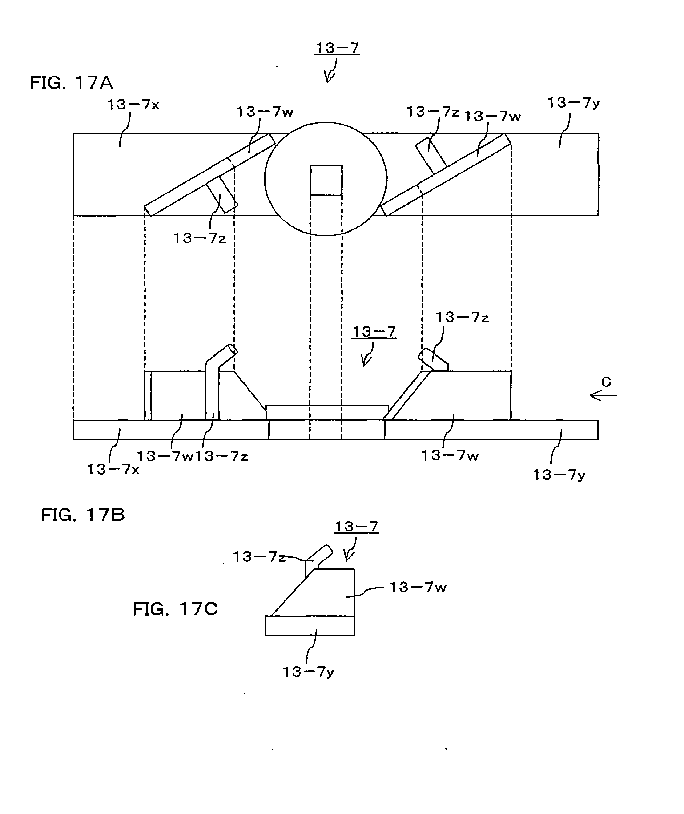

(16) Fig. 17 shows another structure of the rotary feather 13-7. Figs. 17A, 17B and 17C are the top view, the side view and the view viewed from the direction of an arrow C, respectively, of the rotary feather 13-7.

The rotary feather 13-7 shown in Figs. 16A through 16C is provided with two feathers 13-7x and 13-7y each extending from its center. As shown in Figs. 17A through 17C, each of the feathers 13-7x and 13-7y is provided with one collision plate 13-7w for colliding with the waste paper 11-1 and colliding with it, on it. The collision plates 13-7w are provided perpendicular to the feathers 13-7x and 13-7y. A long and slender projection member 13-7z which is higher than the collision plate 13-7w is provided on each of the feathers 13-7x and 13-7y. When the rotary feather 13-7 rotates, the waste paper 11-1 collides with these two feathers 13-7x and 13-7y, the collision plates 13-7w and the projection member 13-7z and is disintegrated into fibers. The material of the rotary feather 13-7 is not especially limited to iron, stainless steel, aluminum, another alloy, resin or the like. The number of the projection members 13-7z provided on the feathers 13-7x and 13-7y is not especially limited.

(17) In the waste paper disintegration device 13, only the rotary feather 13-7 can also be vertically shifted without changing the installed position of the tank 13-5 while rotating the rotary feather 13-7. Specifically, for example, a motor for driving the rotary feather 13-7 can also be provided below the rotary feather 13-7, and the rotary feather 13-7 can also be vertically shifted by another motor for each motor for driving the rotary feather 13-7.

Thus, since by vertically shifting the rotary feather 13-7, waste paper 11-1 lifted by the rotation of the rotary feather 13-7 can also be disintegrated, the entire waste paper 11-1 inputted to the tank 13-7 can be efficiently disintegrated.

(18) Alternatively, in the waste paper disintegration device 13, only the inner cover 13-6 can be vertically shifted without changing the installed position of the tank 13-5 while rotating the rotary feather 13-7.

Thus, since by vertically shifting the inner cover 13-6, waste paper 11-1 lifted by the rotation of the rotary feather 13-7 can also be disintegrated, the entire waste paper 11-1 inputted to the tank 13-7 can be efficiently disintegrated.

(19) Alternatively, the waste paper disintegration device 13 comprises a heating unit, such as a Nichrome wire or the like in the outer circumstance of the tank 13-5, and an adjustment unit for adjusting the temperature in the tank 13-5 by adjusting the amount of current flowing in the heating unit. When the tank 13-5 is heated thus, as a result of an experiment, it is preferable to keep the temperature in the tank 13-5 between 40 and 70 degrees.

Thus, heating the tank 13-5, waste paper 11-1 can be satisfactorily disintegrated.

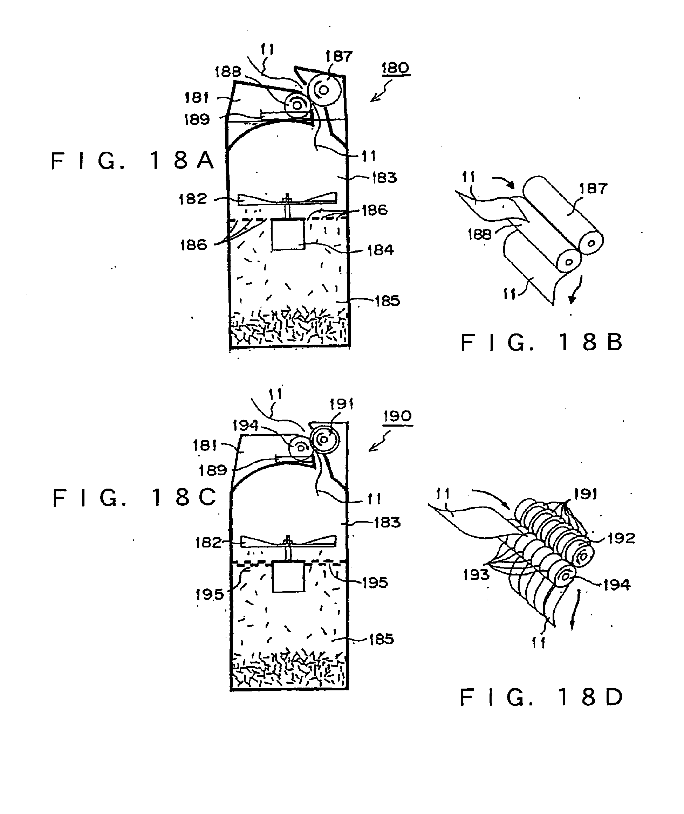

(20) Fig. 18A shows the structures of the waste paper disintegration device 180 in other preferred embodiments of the present invention, and is the inner side view of the waste paper disintegration device 180.

As shown in Fig. 18A, the waste paper disintegration device 180 comprises a supply unit 181 with a mechanism for feeding waste paper 11 to a predetermined place, for supplying the entire waste paper 11 with a predetermined amount of water, a storage unit (first storage unit) 183 with a rotary feather 182 for disintegrating the waste paper 11 into fibers, for storing the waste paper 11 fed from the supply unit 181, a control unit 184 for controlling the rotating operation of the rotary feather 182, a storage unit (second storage unit) 185 disposed under the storage unit 183, for storing the waste paper 11 disintegrated into fibers by the rotary feather 182 and holes 186 provided on a wall separating the storage units 183 and 185, through which the waste paper 11 disintegrated into fibers by the rotary feather 182 passes.

The supply unit 181 comprises a cylindrical member 187 (first cylindrical member) touching one surface of the waste paper 11, for feeding the waste paper 11 to the storage unit 183 by rotating in a predetermined direction, a cylindrical member 188 (second cylindrical member) touching the other surface of the waste paper 11, for feeding the waste paper 11 to the storage unit 183 by rotating in a direction the reversal of the rotating direction of the cylindrical member 187 and a tank 189 for supplying the cylindrical member 188 with water.

Fig. 18B shows that the cylindrical members 187 and 188 feed waste paper 11 to the storage unit 183, which is not shown in Fig. 18B. As shown in Fig. 18B, waste paper 11 is taken in from upward pinched by a pair of the cylindrical members 187 and 188 and is fed to the storage unit 183 disposed below the cylindrical members 187 and 188.

The longitudinal length of the side of each of the cylindrical members 187 and 188 is not especially limited. For example, by forming it longer than the vertical or horizontal length of A4-size waste paper 11, the A4-size waste paper 11 can be also fed to the storage unit 183.

The material of the cylindrical member 187 is not especially limited. For example, a material such that waste paper 11 may not slip when the side of the cylindrical member 187 touches one surface of the waste paper 11 can also be used.

The material of the cylindrical member 188 is not especially limited. For example, a material such that waste paper 11 may not slip when the side of the cylindrical member 188 touches one surface of the waste paper 11 and that the entire one surface of the waste paper 11 can contain a predetermined amount of water, such as sponge or the like, can also be used.

As shown in Fig. 18A, the top of the tank 189 is opened so that a part of the cylindrical member 188 can be dipped into the water of the tank 189. The entire side of the cylindrical member 188 can touch the water of the tank 189 by rotating.

One more tank 189 can also be provided below the cylindrical member 187, and water can also be supplied to both of the cylindrical members 187 and 188.

It is preferable for the amount of water supplied to the entire waste paper 11 by the supply unit 181 to be such that no water is caused even when compressing the waste paper 11 disintegrated into fibers. For example, the amount of water to be supplied to the entire waste paper 11 can also be adjusted by adjusting the amount of water in the tank 189, the degree of sinking of the cylindrical member 188 into the tank 189, the degree of water absorbability of the cylindrical member 188 or the feeding speed of waste paper 11 by the cylindrical members 187 and 188 or the like.

Water supplied to the entire waste paper 11 by the supply unit 181 can also be warm water.

The number of feathers of the rotary feather 182 is not especially limited.

The control unit 184 controls the rotating operation of the rotary feather 182, and is, for example, composed of a control device including a motor and the like.

A plurality of the holes 186 can also be provided on a wall for separating the storage units 183 and 185 from each other, and it is preferable for the size of each hole 186 to be such that the waste paper 11 disintegrated into fibers can pass through it.

By such a structure, waste paper 11 can be fast disintegrated.

Since the supply unit 181 enables the entire waste paper 11 to contain a predetermined amount of water, the entire waste paper 11 can be disintegrated into fibers and accordingly, security can be improved.

Since the supply unit 181 enables the entire waste paper 11 to contain a predetermined amount of water, paper powder, static electricity and noise which are traditionally caused by disintegration without water can be prevented from occurring.

(21) Fig. 18C shows the structure of the waste paper disintegration device 190 in another preferred embodiment of the present invention, and is the inner side view of the waste paper disintegration device 190. The same reference numerals are attached to the same components as those of the waste paper disintegration device 10, and their descriptions are omitted here. Fig. 18D shows that the cylindrical members 192 and 194 feed waste paper 11 to the storage unit 183, which is not shown in Fig. 18D.

As shown in Figs. 18C and 18D, the feature of the waste paper disintegration device 190 is that the supply unit 181 comprises a cylindrical member 192 provided with a plurality of circular cutter units 191 on its side at equal intervals and a cylindrical member 194 provided with a plurality of grooves 193 corresponding to the cutter units 191 of the cylindrical member 192 on its side.

As shown in Fig. 18D, waste paper 11 is held by the cylindrical members 192 and 194, is cut into a predetermined size and is fed to the storage unit 183 disposed below the cylindrical members 192 and 194.

The longitudinal length of the side of each of the cylindrical members 192 and 194 is not especially limited like the cylindrical members 187 and 188. For example, by forming it longer than the vertical or horizontal length of A4-size waste paper 11, the A4-size waste paper 11 can also be fed to the storage unit 183.

The material of the cylindrical member 192 is not especially limited like the cylindrical member 187. For example, a material such that waste paper 11 may not slip when it touches one surface of the waste paper 11 can also be used.

The material of the cylindrical member 194 is not especially limited like the cylindrical member 188. For example, a material such that waste paper 11 may not slip when the side of the cylindrical member 194 touches one surface of the waste paper 11 and that the entire one surface of the waste paper 11 can contain a predetermined amount of water, such as sponge or the like, can also be used.

Thus, since the cylindrical members 192 and 194 can cut the waste paper 11 into a predetermined size before the waste paper 11 is stored in the storage unit 183, the load of the rotary feather 182 can be reduced when disintegrating the waste paper 11, and accordingly, the life of the rotary feather 182 can be extended.

Another feature of the waste paper disintegration device 190 is an opening/closing unit 195 provided on a wall for separating the storage units 183 and 185 from each other, for opening/closing the holes 186.

The opening/closing unit 195 can also be a bothway-sliding (rotary) shutter for opening the holes 186 when holes provided in the opening/closing unit 195 with the same intervals as those between the holes 186 overlaps the holes 186 by sliding (rotating) the holes.

The holes 186 of the opening/closing unit 195 can also be manually opened/closed. Alternatively, the holes 186 can be automatically opened/closed after a predetermined time elapses.

Thus, the storage unit 183 can store the waste paper 11 until the entire wastepaper 11 is completely disintegrated into fibers, security can be further improved.

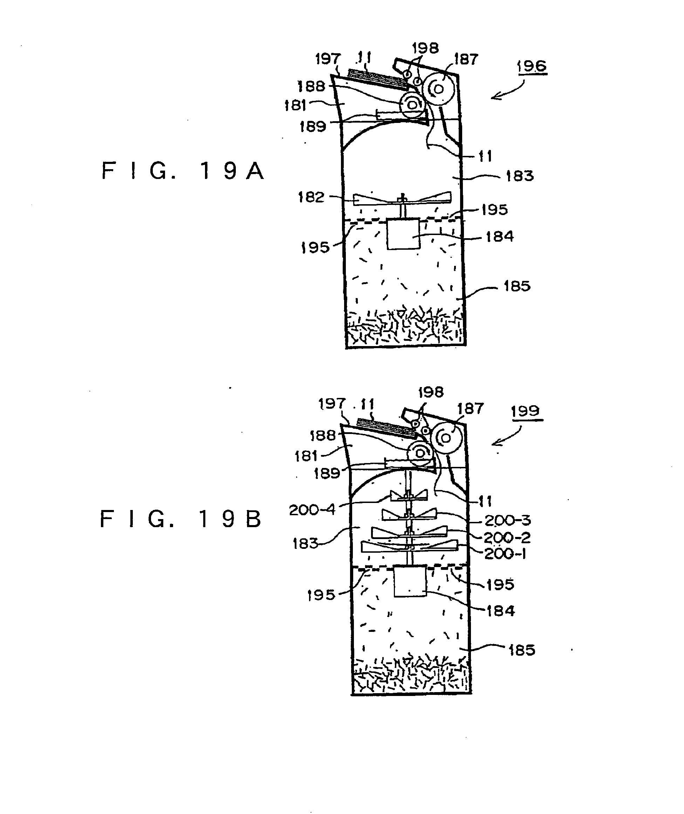

(22) Fig. 19A shows the structure of the waste paper disintegration device 196 in another preferred embodiment of the present invention, and is the inner side view of the waste paper disintegration device 196. The same reference numerals are attached to the same components as those of the waste paper disintegration devices 180 or 190, and their descriptions are omitted here.

As shown in Fig. 19A, the feature of the waste paper disintegration device 196 is the provision of a storage unit (third storage unit) 197 for temporarily storing a plurality of pieces of waste paper 11 before disintegration and a feeding unit 198 for feeding waste paper 11 from the storage unit 197 to the supply unit 181 at predetermined intervals.

The combination of the storage unit 197 and feeding unit 198 is a so-called auto-feeder, which feeds waste paper 11 to the cylindrical members 187 and 188 by two rollers.

Thus, a process of feeding waste paper 11 to the supply unit 181 can be automated. (23) Fig. 19B shows the structure of the waste paper disintegration device 199 in another preferred embodiment of the present invention, and is the inner side view of the waste paper disintegration device 199. The same reference numerals are attached to the same components as those of the waste paper disintegration device 180, 190 or 196 and their descriptions are omitted here.

As shown in Fig. 19B, the feature of the waste paper disintegration device 199 is the provision of a plurality of rotary feathers 200 (200-1, 200-2, 200-3 and 200-4).

In the example shown in Fig. 19B, four rotary feathers 200-1 ~200-4 are mounted on one shaft extending from the control unit 184 to the ceiling of the storage unit 183 at predetermined intervals. The largest rotary feather 200-1 is mounted in the lowest position, the second largest rotary feathers 200-2~4 is mounted in the second higher position and so on. The number of rotary feathers 200 should be two or more and is not limited to four.

Thus, since by providing a plurality of rotary feathers 200, waste paper 11 can be further efficiently and quickly disintegrated and also the load of each rotary feather 200 can be reduced, the life of the rotary feather 200 can be extended.

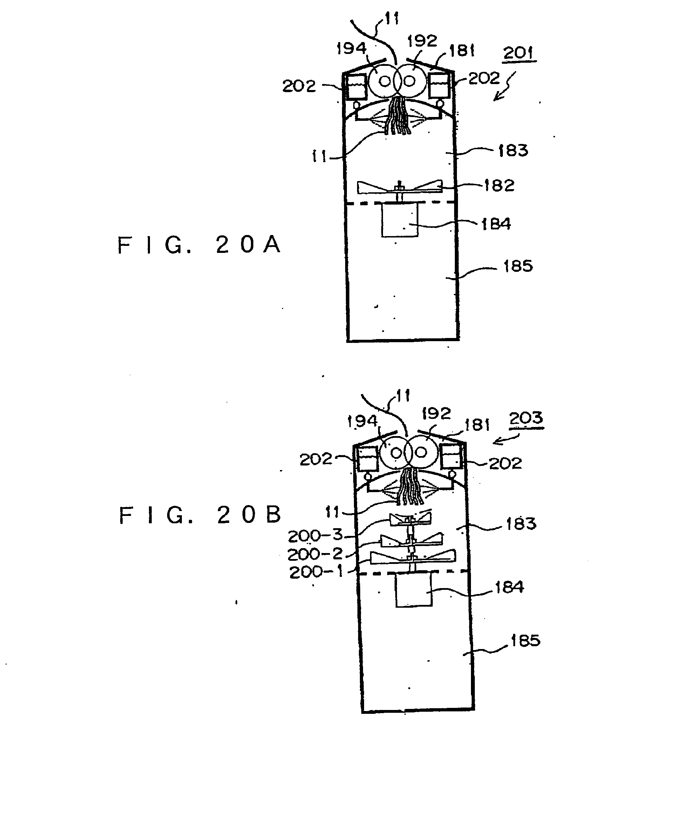

(24) Fig. 20A shows the structure of the waste paper disintegration device 201 in another preferred embodiment of the present invention, and is the inner side view of the waste paper disintegration device 201. The same reference numerals are attached to the same components as those of the waste paper disintegration device 180 or 190, and their descriptions are omitted here.

As shown in Fig. 20A, the feature of the waste paper disintegration device 201 is the provision of a spraying unit 202 capable of spraying a predetermined amount of water on cut waste paper 11 fed by the cylindrical members 192 and 194. The spraying unit 202 can comprise, for example, a water tank unit, a spraying outlet, a water supplying pump and the like, and can spray by applying pressure to water stored in the water tank by the water supplying pump and supplying it to the spraying outlet.

As shown in Fig. 20A, it is preferable for the spraying unit 202 to be able to comprise two supply units 181, and to simultaneously supply water to each surface of the cut waste paper 11 by the cylindrical members 192 and 194.

Even by such a structure, waste paper 11 can be quickly disintegrated, also security can be improved and paper powder, static electricity and noise caused by disintegration can be prevented from occurring.

(25) Fig. 20B shows the structure of the waste paper disintegration device 203 in another preferred embodiment of the present invention, and is the inner side view of the waste paper disintegration device 203. The same reference numerals are attached to the same components as those of the waste paper disintegration device 180, 190 or 199, and their descriptions are omitted here.

As shown in Fig. 20B, the feature of the waste paper disintegration device 203 is the provision of the cylindrical members 192 and 194 and a plurality of rotary feathers 200 (200-1, 200-2 and 200-3). The number of the rotary feathers 200 can be two or more.

Since by such a structure, waste paper 11 can be quickly disintegrated and also the load of each rotary feather 200 can be more reduced than that in the waste paper disintegration device 180, 190 or 199, the life of the rotary feather can be extended.

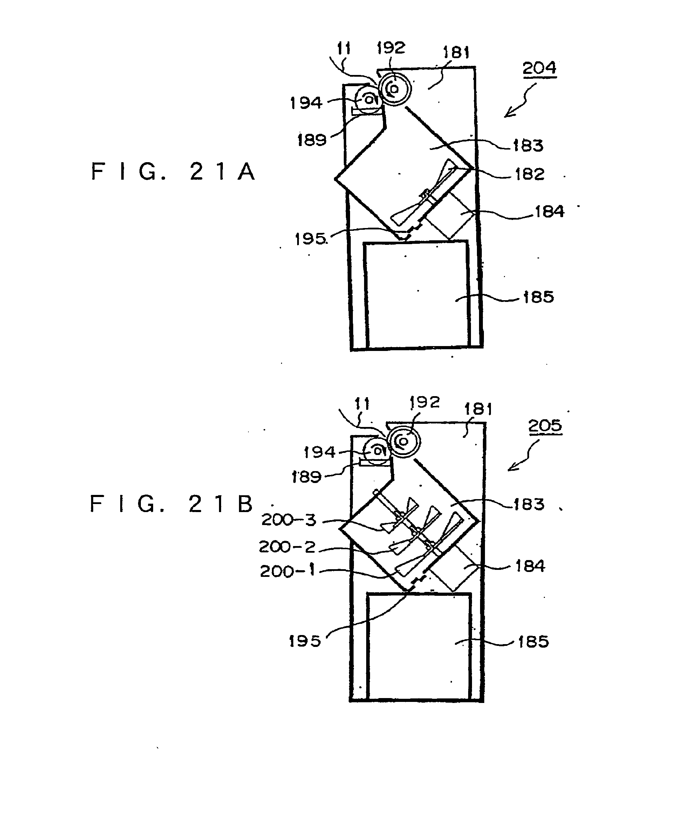

(26) Fig. 21A shows the structure of the waste paper disintegration device 204 in another preferred embodiment of the present invention, and is the inner side view of the waste paper disintegration device 204. The same reference numerals are attached to the same components as those of the waste paper disintegration device 190 and their descriptions are omitted here.

As shown in Fig. 21A, the feature of the waste paper disintegration device 204 is that the storage units 183 is inclined at a predetermined angle. The inclination angle of the storage unit 183 is not especially limited.

Since by such a structure, waste paper 11 can be collected in a part of the base of the storage unit 183, the waste paper 11 can be efficiently disintegrated by the rotary feather 182.

(27) Fig. 21B shows the structure of the waste paper disintegration device 205 in another preferred embodiment of the present invention, and is the inner side view of the waste paper disintegration device 205. The same reference numerals are attached to the same components as those of the waste paper disintegration device 190, 199 or 204, and their descriptions are omitted here.

As shown in Fig. 21B, the feature of the waste paper disintegration device 205 is that the storage unit 183 is inclined at a predetermined angle and that a plurality of rotary feathers 200 (200-1, 200-2 and 200-3) are provided. The number of the rotary feathers 200 can be two or more.

Thus, waste paper 11 can be efficiently and quickly disintegrated, and the life of the rotary feather 200 can be extended.

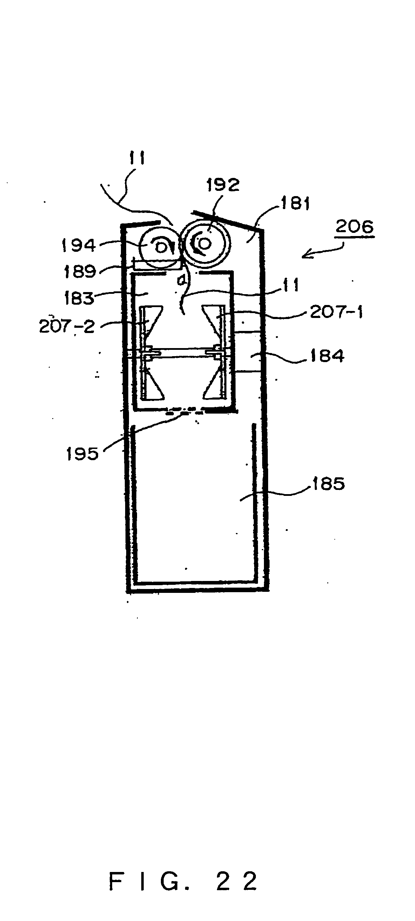

(28) Fig. 22 shows the structure of the waste paper disintegration device 206 in another preferred embodiment of the present invention, and is the inner side view of the waste paper disintegration device 206. The same reference numerals are attached to the same components as those of the waste paper disintegration device 191, and their descriptions are omitted here.

As shown in Fig. 22, the feature of the waste paper disintegration device 206 is that rotary feathers 207 (207-1 an 207-2) are provided on the shafts of each side of the storage unit 183 face to face.

Even by such a structure, wastepaper 11 can be quickly disintegrated, also security can be improved and paper powder, static electricity and noise caused by disintegration can be prevented from occurring.

The outermost case of the waste paper disintegration device 180, 190, 199, 203, 204 or 206 in the above-mentioned preferred embodiments can be cubic or cylindrical. The storage unit 183 can also be cubic or cylindrical.

Although each of the waste paper disintegration devices 180, 190, 196, 199, 201 and 203~206 in the above-mentioned preferred embodiments is provided with a rotary feather with four feathers, the number of feathers of the rotary feather is not limited.

Although the cylindrical members 187 and 188 in the above-mentioned preferred embodiments supply waste paper 11 with a determined amount of water and feed the waste paper 11 to the storage unit 183, a plurality of convex parts of a predetermined size can also be provided on the side of one of the cylindrical members 187 and 188, and a plurality of concave parts corresponding to the convex parts can also be provided on the side of the other cylindrical member. Thus, since by rotating one of the cylindrical members 187 and 188 in a direction the reversal of that of the other, a plurality of holes can be opened in the waste paper 11, and the waste paper 11 can be fed to the storage unit 183. Therefore, the waste paper 11 can be quickly disintegrated, and also the load of the rotary feather can be reduced.

Although in the waste paper disintegration devices 180, 190, 196, 199, 201 and 203~206, disintegrated waste paper 11 is collected in the storage unit 185 provided under the storage unit 183, holes 186 can also provided on the side of the storage unit 183, and also the storage unit 185 can also be provided side by side the storage unit 183 to horizontally feed the disintegrated waste paper 11.

Each of the waste paper disintegration devices 180, 190, 196, 199, 201 and 203~206 in the above-mentioned preferred embodiments can also comprise a hole opening device capable of opening a plurality of holes in the waste paper 11.

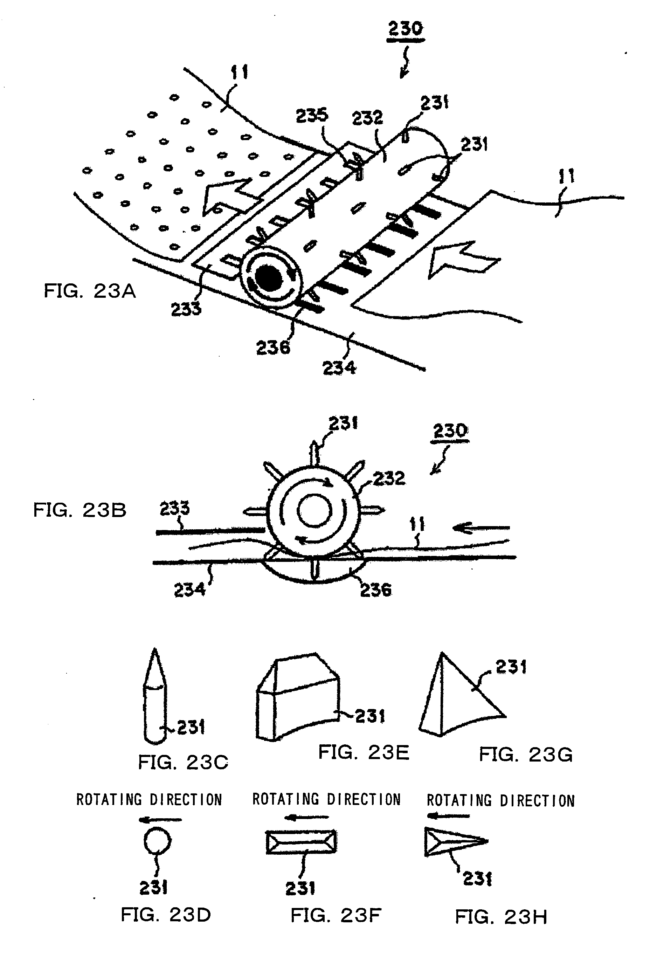

Fig. 23A shows the perspective illustration of the hole opening device.

As shown in Fig. 23A, a hole opening device 203 comprises a cylindrical member 232 provided with spike-shape members 231 on its side at equal intervals, for opening a plurality of holes in the entire waste paper 11 by rotating it and paper clumping plates 233 and 234 for clumping each surface of the waste paper 11 in such a way that the waste paper 11 can touch the side of the cylindrical member 232.

The paper clumping plate 233 is provided with grooves 235 at the same intervals as those of the spike-shape members 231 so that the spike-shape members 231 may not touch the paper clumping plate 233 when rotating the cylindrical member 232.

Similarly, the paper clumping plate 234 is also provided with grooves 236 at the same intervals as those of the spike-shape members 231 so that the spike-shape members 231 may not touch the paper clumping plate 234 when rotating the cylindrical member 232.

Fig. 23B is the side view of the hole opening device 230.

As shown in Fig. 23B, when waste paper 11 is fed from the right in Fig. 23B, the waste paper 11 is inserted between the rotating cylindrical member 232 and the paper clumping plate 234. Then, the waste paper 11 is pierced by the spike-shape member 231 between the cylindrical member 232 and the paper clumping plate 234, and is fed between the paper clumping plates 233 and 234.

Fig. 23C shows one example of the spike-shape member 231. Fig. 23D is the top view of the spike-shape member 231 shown in Fig. 23C.

The spike-shape member 231 shown in Figs. 23C and 23D is formed into a cylinder, and its tip is pointed. Thus, circular holes can be opened in waste paper 11.

Fig. 23E shows another example of the spike-shape member 231. Fig. 23F is the top view of the spike-shape member 231 shown in Fig. 23E.

The spike-shape member 231 shown in Figs. 23E and 23F is formed into a rectangular parallelpiped, and its tip is pointed. Thus, rectangular holes can be opened in waste paper 11.

Fig. 23G shows another example of the spike-shape member 231. Fig. 23H is the top view of the spike-shape member 231 shown in Fig. 23G.

The spike-shape member 231 shown in Figs. 23G and 23H is formed into a triangular pyramid, and its tip is pointed. Thus, triangular holes can be opened in waste paper 11.

The spike-shape member 231 is not limited to the composition shown in Fig. 23C~23H.

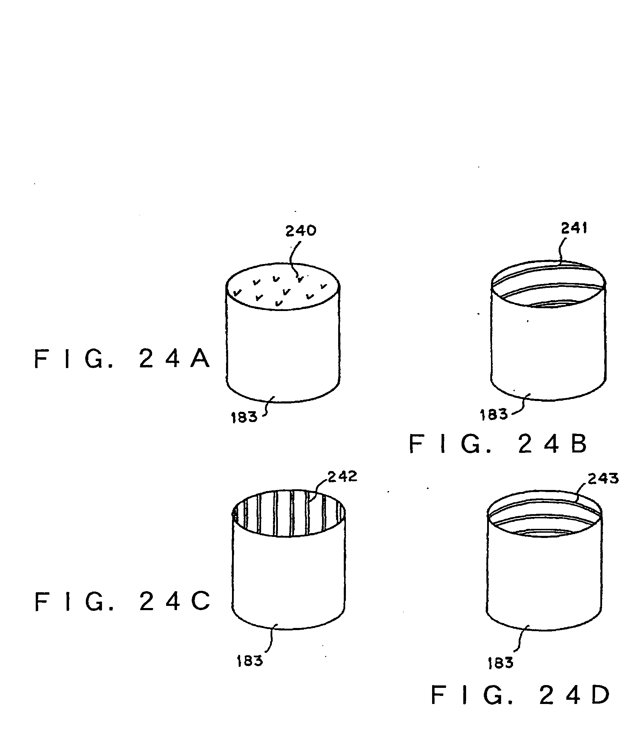

As shown in Fig. 24A, a plurality of projections 240 can also be provided on the inside of the storage unit 183 of each of the waste paper disintegration devices 180, 190, 196, 199, 201 and 203~206 in the above-mentioned preferred embodiments. By structuring the inside of the storage unit 183 thus, too much waste paper 11 including water can be prevented from sticking to the inside of the storage unit 183.

As shown in Fig. 24B, a spiral groove 241 can also be provided on the inside of the storage unit 183 for the same reason. By structuring the inside of the storage unit 183 thus, too much waste paper 11 including water can be prevented from sticking to the inside of the storage unit 183.

As shown in Fig. 24C, a plurality of vertically parallel grooves 242 can also be provided on the inside of the storage unit 183 for the same reason. By structuring the inside of the storage unit 183 thus, too much waste paper 11 including water can be prevented from sticking to the inside of the storage unit 183.

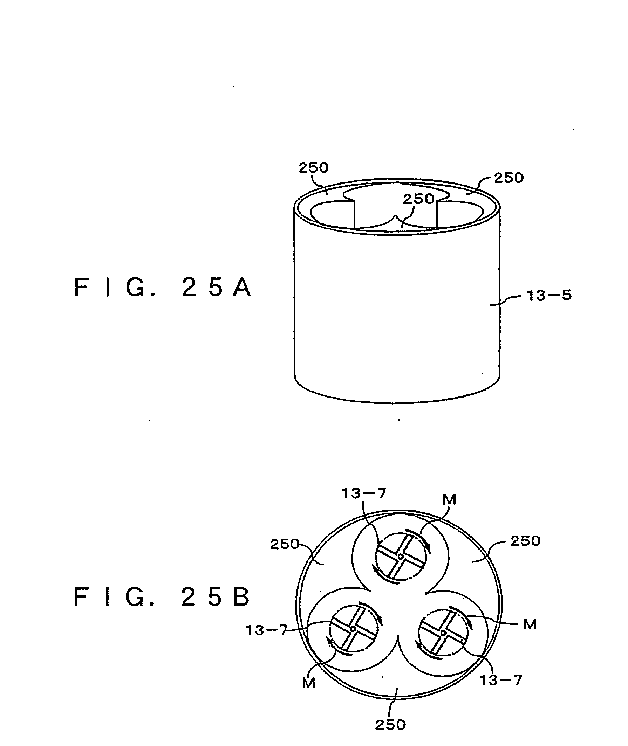

As shown in Fig. 24D, a plurality of horizontally parallel grooves 243 can also be provided on the inside of the storage unit 183 for the same reason. By structuring the inside of the storage unit 183 thus, too much waste paper 11 including water can be prevented from sticking to the inside of the storage unit 183. (29) Figs. 25A & 25B shows another structure of the tank 13-5 of the waste paper disintegration device 13 provided with three rotary feathers 13-7. Figs. 25A and 25B are the perspective illustration and top view, respectively, of the tank 13-5 with another structure. An arrow M shown in Fig. 25B indicate one example of the flow of waste paper 11 in the case where each rotary feather 13-7 is rotated.

Three pole members 250 whose edge is shaped like a ginkgo leaf are provided on the inner side of the tank 13-5 shown in Figs. 25A and 25B. The side facing the rotary feathers 137 of each cylindrical member 250 is formed into a curded surface along the rotation orbit of the rotary feather 13-7. Thus, each rotary feather 13-7 can be rotated keeping a predetermined distance from all the sides of the three cylindrical members 250.

Since the three rotary feathers 13-7 can be rotated keeping a predetermined distance from the side of the tank 13-5, waste paper 11 does not stay on the inner side of the tank 13-5 and a large amount of waste paper 11 can be efficiently disintegrated.

Two or more rotary feathers 13-7 and four or more cylindrical members 250 can also be provided.

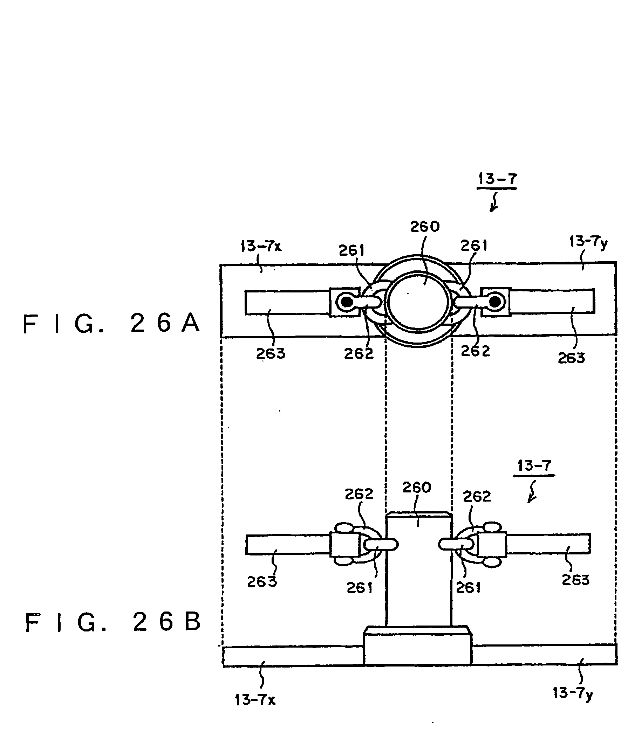

(30) Figs. 26A & 26B show another structure of the rotary feather 13-7. Figs. 26A and 26B are the top and side views, respectively, of the rotary feather 13-7. The rotary feather 13-7 shown in Figs. 26A and 26B are rotating. The same reference numerals are attached to the same components as those in Fig. 17.

Each of the rotary feather 13-7 shown in Figs. 26A and 26B comprises two feathers 13-7x and 13-7y which are extending from its center in opposite directions. The rotary feather 13-7 also comprises a cylindrical member 260 extending upward along a rotation shaft. Two metal rings 261 are provided on the side of the cylindrical member 260. Then, a bar member 263 with two metal rings 262 near its end is connected to each of the two metal rings 261.

Since by rotating the rotary feather 13-7, the bar member 262 can be also rotated, waste paper 11-1 can collide with the feathers 13-7x and 13-7y and the bar member 263 to be disintegrated into fibers. Thus, the waste paper 11-1 can be efficiently disintegrated while suppressing noise. The material of the rotary feather 13-7 is not especially limited to iron, stainless steel, aluminum, another alloy, resin and the like. The number of the bar members 263 provided on the cylindrical member 260 is not also limited.

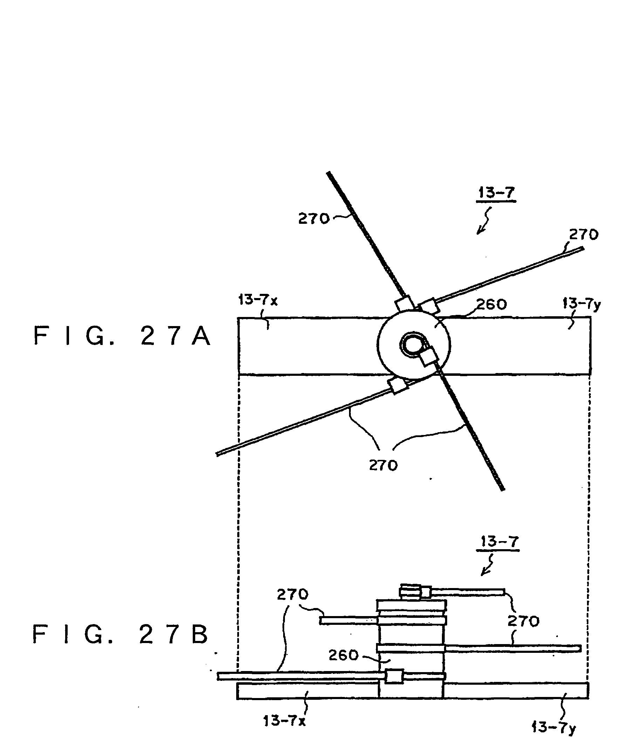

(31) Figs. 27A & 27B another structure of the rotary feather 13-7. Figs. 27A and 27B are the top and side views, respectively, of the rotary feather 13-7. The same reference numerals are attached to the same components as those in Figs. 17 and 26.

Each of the rotary feather 13-7 shown in Figs. 27A and 27B comprises two feathers 13-7x and 13-7y and a cylindrical member 260 extending upward along a rotation shaft. For example, a plurality of resin string members 270 is provided on the side of the cylindrical member 260 at different levels.

Since by rotating the rotary feather 13-7, the string members 270 can also be rotated, waste paper 11-1 can collide with the feathers 13-7x and 13-7y and the string members 270 to be disintegrated into fibers. Thus, the waste paper 11-1 can be efficiently disintegrated while suppressing noise. The material of the rotary feather 13-7 is not especially limited to iron, stainless steel, aluminum, another alloy, resin and the like. The number of the string members 270 provided on the cylindrical member 260 is not also limited. The material of the string members 270 is not especially limited to resin, and a wire rope, a wire or the like can also be used.

The rotary feather 13-7 can also be provided with no feathers 13-7x and 13-y.

The rotary feather 13-7 can also comprise string members 270 instead of the feathers 13-7x and 13-7y. (32) Next, a case in which waste paper 11 disintegrated by the waste paper disintegration device in the above-mentioned preferred embodiment is used as culture soil is described.

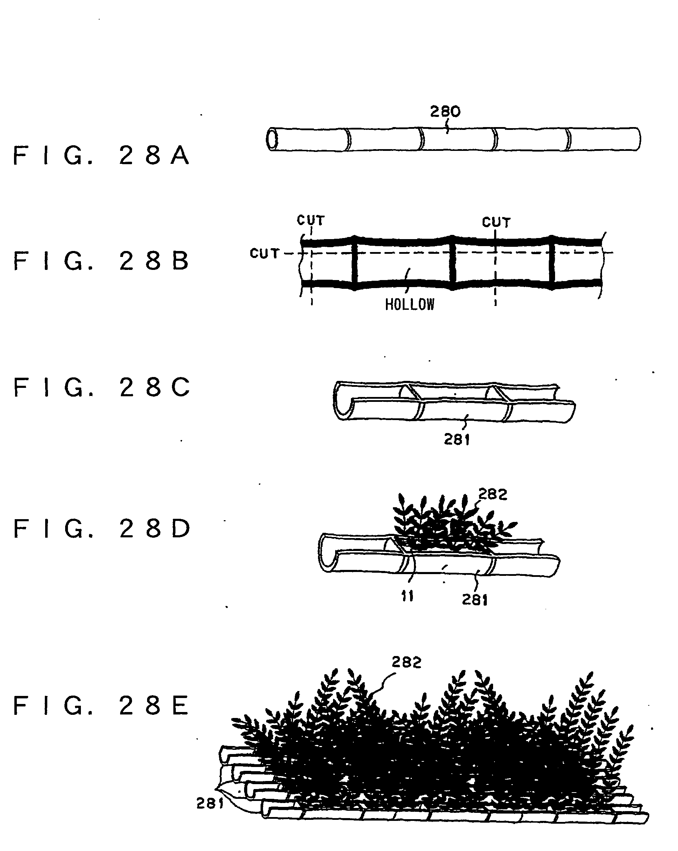

Figs. 28A~E show a case where disintegrated waste paper 11 is used as culture soil.

Firstly, as shown in Fig. 28A, a piece of green bamboo 280 in a proper length, whose ends are cut is prepared.

Fig. 28B is the section view of a part of the green bamboo 280. As shown in Fig. 28B, each end of the green bamboo 280 is cut in such a way that one complete hollow space (complete hollow space between joints of the green bamboo 280) can be secured. Furthermore, the upper part of the cut green bamboo 280 (upper part of the laid green bamboo 280) is cut off. Although in the example shown in Fig. 28B, the green bamboo 280 is formed into one hollow space with its upper part cut off in such a way that a plant can be planted, the green bamboo 280 can also be formed into two or more hollow spaces with its upper part cut off.

Thus, each end and upper part of the green bamboo 280 are cut off, and a flower-pot 281 made of the green bamboo 280 shown in Fig. 28C is formed.

Then, as shown in Fig. 28D, disintegrated waste paper 11 is put in the hollow space at the center of the flower-pot 281, and a plant 282 is planted in it. By changing the plant 282 from time to time, evergreens can be realized.

By using a plurality of the flower-pots 281 in parallel shown in Fig. 28E, many and various plants 282 can be planted. When using a plurality of the flower-pots 281 in parallel, the flower-pots 281 can also be connected.

(33) Figs. 29A~G show another case where disintegrated waste paper 11 is used as culture soil. Fig.29A is the section view of a part pf the green bamboo 280 shown in Fig. 28A. As shown in Fig. 29A, each end of the green bamboo 280 is cut off in such a way that two hollow spaces can be secured, and furthermore the upper part of the each of the two hollow spaces of the laid green bamboo 280 is cut off and formed in a V-character shape. Although in the example shown in Fig. 29A, the green bamboo 280 is formed in such a way that plants can be plated in the two hollow spaces, the green bamboo 280 can also be formed in such a way that one, or three or more can be provided to plant plants.

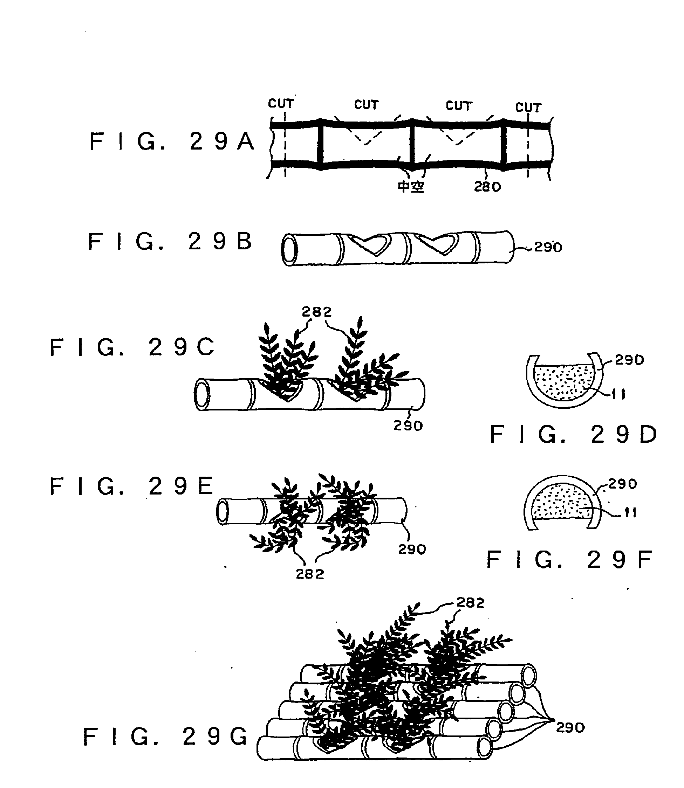

By cutting off each end and upper part of the green bamboo 280 thus, a flower-pot 290 made of the green bamboo 280 shown in Fig. 29B is formed.

Then, as shown in Fig. 29C, disintegrated waste paper 11 is put in the two hollow spaces of the flower-pot 290, and plants 282 are planted. Fig. 29D is the section view of the flower-pot 290 shown in Fig. 29C.

As shown in Fig. 29E, the flower-pot 290 can also installed on the ground in such a way that the opening cut in a V-character shape. Fig. 29F is the section view of the flower-pot 290 shown in Fig. 29E. Even if the flower-pot 290 is installed upside down, waste paper 11 intertwines with each other and sticks to the inside of the flower-pot 290, since the waste paper 11 is disintegrated into fibers. Therefore, the waste paper 11 does not drop out of the flower-pot 290.

By using a plurality of flower-pots 290 in parallel as shown in Fig. 29G, many and various plants 282 can be planted. When using a plurality of flower-pots 290 in parallel, those flower-pots 290 can also be connected.

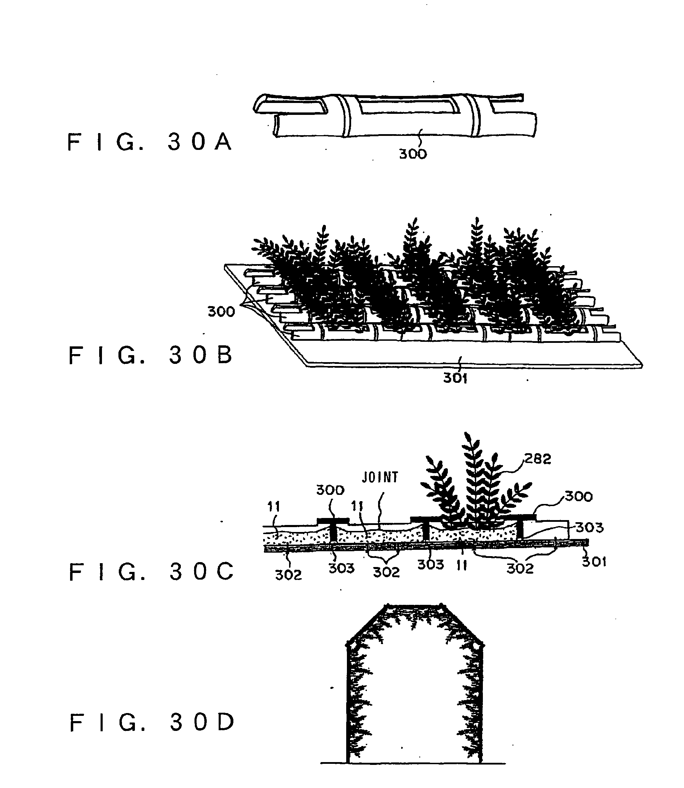

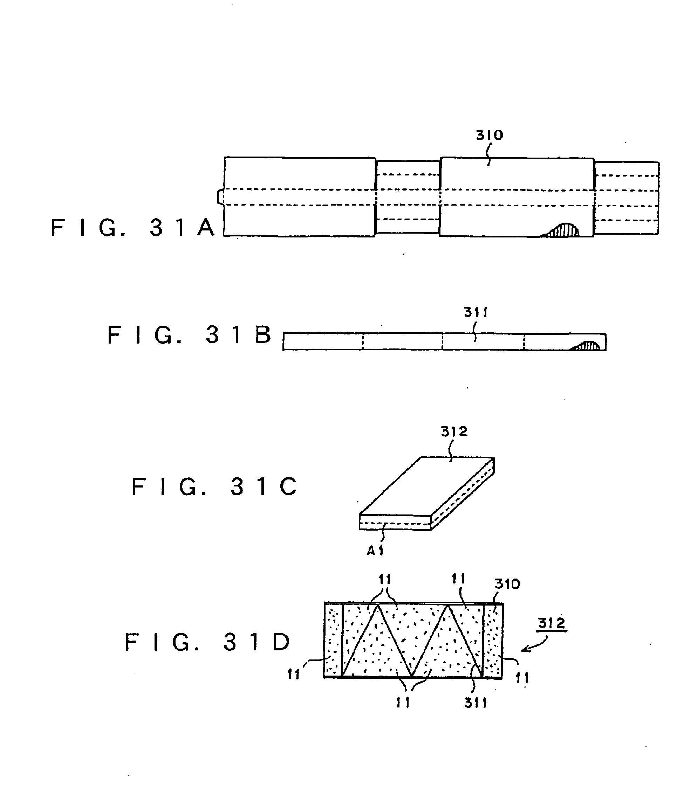

(34) Figs. 30A~D show another case where disintegrated waste paper 11 is used as culture soil.

For example, the green bamboo 280 shown in Fig. 28A is vertically divided in halves, also a part of the green bamboo 280 is cut off in a rectangle shape between joints and also each end of the green bamboo 280 is cut off to leave two joints. Then, a flower-pot 300 shown in Fig. 30A is formed.

Fig. 30B typically shows that a plurality of the flower-pots 300 shown in Fig. 30A. As shown in Fig. 30B, four and three flower-pots 300 are arrayed vertically and horizontally, respectively, on a panel 301, disintegrated waste paper 11 is put in each hollow space and plants 282 are planted in them.

Fig. 30C is the section view of the flower-pot 300 shown in Fig. 30B. As shown in Fig. 30C, each flower-pot 300 is fixed on the panel 301 by screws 302. Each joint of each flower-pot 300 is provided with a water outlet 303. Since water in the flower-pot 300 moves into another flower-pot 300 through the water outlet 303, all the plants 282 can be supplied with a proper amount of water.

As shown in Fig. 30D, a plurality of flower-pots 300 can also connected and formed into an arch.

The material of the flower-pot for containing waste paper 11 when using disintegrated waste paper 11 as culture soil is not limited to green bamboo 280, and plastics, Styrofoam, wood, bricks, blocks, stones or the like can also be used.

Alternatively, soil can be put in the formed flower-pot and be covered with disintegrated waste paper 11.

Thus, by using disintegrated waste paper 11 as culture soil, plants 282 can be planted without the waste paper 11 dropping out of the formed flower-pot. Thus, a roof-top garden can be made at low cost, plants can be vertically planted on the wall, gate or the like of a building at low cost (vertical greening) or plants can be planted in an arch shape (hanging greening).

(35) Next, a case where waste paper 11 disintegrated by the waste paper disintegration device in the above-mentioned preferred embodiment is used as a heat insulation material is described.

Figs. 31A~D shows a case where disintegrated waste paper 11 is used as a heat insulating material.

Fig. 31A is the unfolded view of the outer frame 310 constituting a heat insulating material. Although in the example shown in Fig. 31, corrugated cardboard is used as the outer frame 310 of a heat insulating material, the material of the outer frame 310 of a heat insulating material is not limited to cardboard, such as corrugated cardboard or the like. A heat insulating material shown in Fig. 31 can be used, for example, as a unit type heat insulating material for the wall and ceiling of a building.

Fig. 31B is the unfolded view of an inner separating member 311 filled inside the heat insulating material. Although in the example shown in Fig. 31, corrugated cardboard is used for this inner separating member 311, the material of the inner separating member 311 is not limited to cardboard, such as corrugated cardboard or the like.

Firstly, a flame-resistant treatment is applied beforehand to the outer frame 310 and inner separating member 311 by attaching a flame-proof material or flame-resistant material, such as boron or the like on their surfaces. For example, an adhesive can be coated on the entire surfaces of the outer frame 310 and inner separating member 311, and a flame-proof material or a flame-resistant material, such as boron or the like can be attached on them. Alternatively, for example, ink mixed with a flame-proof material or a flame-resistant material, such as boron or the like can be printed on the entire surfaces of the outer frame 310 and inner separating member 311.

Then, the outer frame 310 is formed into a box by folding it along the dotted lines shown in Fig. 31A. Then, an inner separating member 311 folded along dotted lines shown in Fig. 31B is built in the box, and disintegrated waste paper 11 is filled in the box. Then, a heat insulating material 312 shaped in a rectangular parallelepiped shown in Fig. 31C can be produced.

Fig. 31D is the A1 section view of the heat insulating material 312 shown in Fig. 31C. As shown in Fig. 31D, the inner separating member 311 is folded zigzag and fixed inside the outer frame 310, and disintegrated waste paper 11 is filled in space formed by the outer frame 310 and inner separating member 311. A flame-resistant treatment is also applied to this disintegrated waste paper 11 by adding a flame-proof material or a flame-resistant material, such as boron or the like to it beforehand.

Thus, by providing the inner separating member 311 inside the outer frame 310, the strength of the heat insulating material 312 is improved, and also the waste paper 11 filled in the heat insulating material 312 can be prevented from sinking. By constituting the heat insulating material 312 by waste paper 11, corrugated cardboard and the like, a light and inexpensive heat insulating material 312 can be produced. Waste paper 11 discharged from the corrugated cardboard manufacturing plant or the like can also be filled inside the heat insulating material 312.

A heat insulating material can also be produced by filling flame-resistant fibers produced by mixing disintegrated waste paper 11 (fibers) with boron, a flame-proof material, a flame-resistant material and another material in a bag to which a flame-resistant treatment is applied instead of the box to which a flame-resistant treatment is applied.

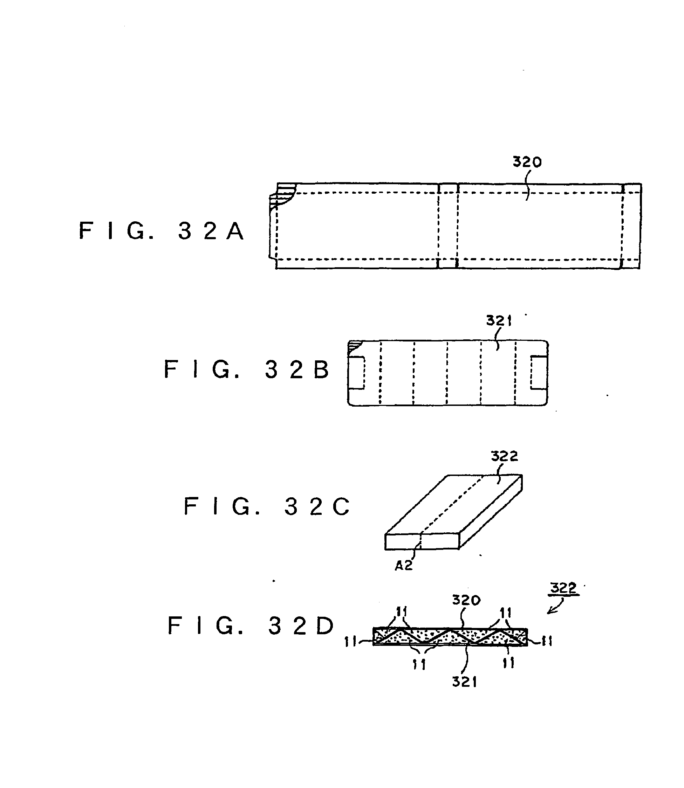

(36) Figs. 32A~D shows another case where disintegrated waste paper 11 is used a heat insulating material.

Fig. 32A is the unfolded view of the outer frame 310 constituting a heat insulating material. Although in the example shown in Fig. 32, corrugated cardboard is used for the outer frame 320 of a heat insulating material, the material of the outer frame 320 of a heat insulating material is not limited to cardboard, such as corrugated cardboard or the like. The heat insulating material shown in Fig. 32 can also used, for example, as a unit type one for the wall and ceiling of a building.

Fig. 32B is the unfolded view of the inner separating member 321 provided inside a heat insulating material. Although in the example shown in Fig. 32, corrugated cardboard is also used for this inner separating member 321, the material of the inner separating member 321 is also not limited to cardboard, such as corrugated cardboard or the like.

Firstly, a flame-resistant treatment is beforehand applied to the outer frame 320 and inner separating member 321 by attaching a flame-proof material or flame-resistant material, such as boron or the like on their surfaces. For example, an adhesive can be coated on the entire surfaces of the outer frame 320 and inner separating member 321, and a flame-proof material or a flame-resistant material, such as boron or the like can be attached on them. Alternatively, for example, ink mixed with a flame-proof material or a flame-resistant material, such as boron or the like can be printed on the entire surfaces of the outer frame 320 and inner separating member 321.

Then, an outer frame 320 is formed into a box by folding it along the dotted lines shown in Fig. 32A. Then, an inner separating member 321 folded along dotted lines shown in Fig. 32B is built in the box, and disintegrated waste paper 11 is filled in the box. Then, a heat insulating material 322 shaped in a rectangular parallelepiped shown in Fig. 32C can be produced.

Fig. 32D is the A2 section view of the heat insulating material 322 shown in Fig. 32C. As shown in Fig. 32D, the inner separating member 321 is folded zigzag and fixed inside the outer frame 320, and disintegrated waste paper 11 is filled in space formed by the outer frame 320 and inner separating member 321. A flame-resistant treatment is also applied to this disintegrated waste paper 11 by adding a flame-proof material or a flame-resistant material, such as boron or the like to it beforehand.

Thus, by providing the inner separating member 321 inside the outer frame 320, the strength of the heat insulating material 322 is improved, and also the waste paper 11 filled in the heat insulating material 322 can be prevented from sinking. By constituting the heat insulating material 322 by waste paper 11, corrugated cardboard and the like, a light and inexpensive heat insulating material 322 can be produced. Waste paper 11 discharged from the corrugated cardboard manufacturing plant or the like can also be filled inside the heat insulating material 322.

A heat insulating material can also be produced by filling flame-resistant fibers produced by mixing disintegrated waste paper 11 (fibers) with boron, a flame-proof material, a flame-resistant material and another material in a bag to which a flame-resistant treatment is applied instead of the box to which a flame-resistant treatment is applied.

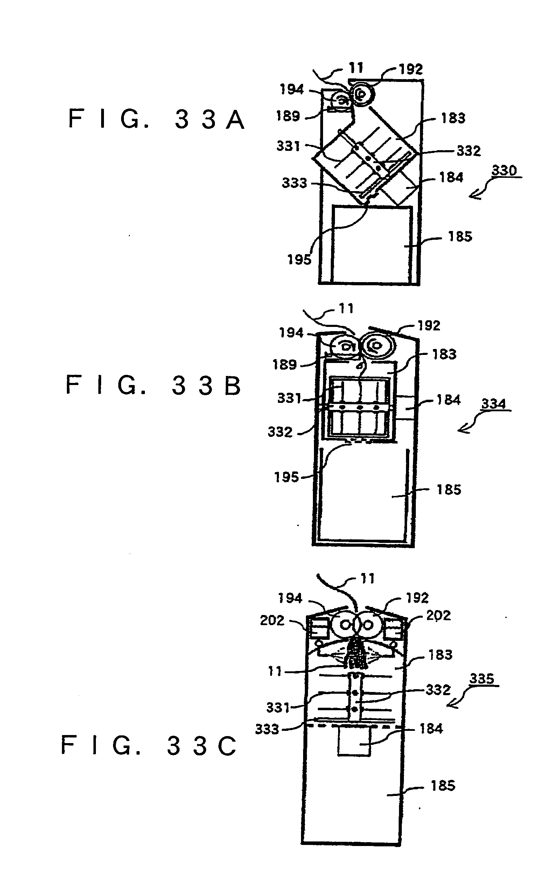

(37) Fig. 33A shows the structure of the waste paper disintegration device 330 in another preferred embodiment of the present invention, and is the inner side view of the waste paper disintegration device 330. The same reference numerals are attached to the same components as those of the waste paper disintegration device 204, and their descriptions are omitted here.

As shown in Fig. 33A, the feature of the waste paper disintegration device 330 is that the storage unit 183 is inclined at a predetermined angle and also comprises a rotary feather 332 provided with a plurality of string members 331 on a rotation shaft.

Besides thick or broad feathers 333, the rotary feather 332 is provided with three sets of four string members 331 provided on the rotation shaft of the feathers 333 in a direction perpendicular to the rotation shaft of the feathers 333 and in the directions of a cross with the rotation shaft of the feathers 333 at its center. The rotary feather 332 can also be provided with string members 331 instead of the feathers 333.

By rotating the string members 331 and the feathers 333, waste paper 11 can collide with the string members 331 and feathers 333 to be disintegrated into fibers. Thus, the waste paper 11 can be more efficiently disintegrated while suppressing noise. The material of the feather 333 is not especially limited to iron, stainless steel, aluminum, another alloy, resin or the like. The number of string members 331 provided on the rotation shaft of the feather 333 is not limited. The material of the string members 331 is not also limited to a wire rope, a wire, resin or the like.

(38) Fig. 33B shows the structure of the waste paper disintegration device 334 in another preferred embodiment of the present invention, and is the inner side view of the waste paper disintegration device 334. The same reference numerals are attached to the same components as those of the waste paper disintegration device 206, and their descriptions are omitted here.

As shown in Fig. 33B, the feature of the waste paper disintegration device 334 is that the rotary feather 332 is provided in the storage unit 183 in such a way that the rotation shaft can be located in a direction perpendicular to the side of the storage unit 183. The rotary feather 332 shown in Fig. 33B is provided with only string members 331.

Thus, the waste paper 11 can be more efficiently disintegrated while suppressing noise.

(39) Fig. 33C shows the structure of the waste paper disintegration device 335 in another preferred embodiment of the present invention, and is the inner side view of the waste paper disintegration device 335. The same reference numerals are attached to the same components as those of the waste paper disintegration device 201, and their descriptions are omitted here.

As shown in Fig. 33C, the feature of the waste paper disintegration device 335 is the provision of the spraying unit 202 capable of spraying a predetermined amount of water on waste paper pieces 11 fed by the cylindrical members 192 and 194 and the rotary feather 332.

Thus, the waste paper 11 can be more efficiently disintegrated while suppressing noise.

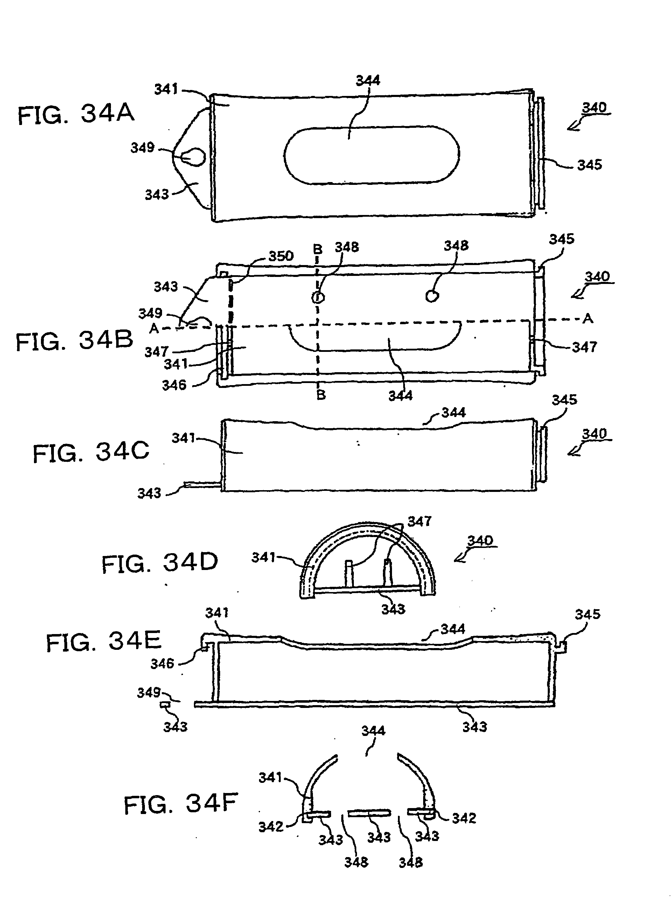

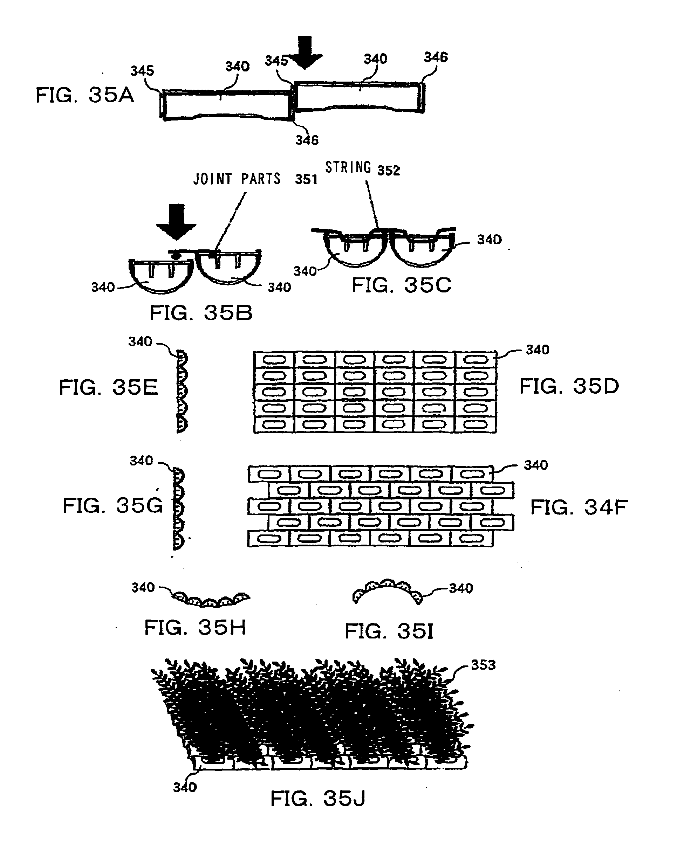

(40) Figs. 34A~F shows an example of a flower-pot in which disintegrated waste paper 11 is put when using it as culture soil. Figs. 34A, 34B, 34C, 34D, 34E and 34F are the front view, back view (view where Fig. 3A is viewed upward from a direction perpendicular to the paper surface), side view (view where Fig. 3A is viewed upward from a direction parallel to the paper surface) , top view (view where Fig. 3A is viewed rightward from a direction parallel to the paper surface), A-A section view and B-B section view, respectively, of a flower-pot 340.

As shown in Figs. 34A~34F, the flower-pot 340 is formed similarly as a piece of green bamboo with two joints is vertically divided into halves. The material of the flower-pot is not especially limited to plastics, resin or the like.

The flower-pot 340 comprises an outer framing member 341 whose upper and lower ends are formed into pseudo green bamboo joints and a plate member 343 slid and inserted into a groove 342 provided at the longitudinal end of the outer framing member 341, for covering the back of the flower-pot.

The outer framing member 341 is provided with a hole 344 at its center, and a plant is put in the flower-pot 340 through the hole 344.

An arch-shaped projection 345 is provided beneath the bottom of the outer framing member 341. An arch-shaped groove 346 capable of accommodating the projection 345 is provided on the top of the outer framing member 341.

Furthermore, two slits 347 are provided on each of the inside with the projection 345 and the inside with the groove 346, of the outer framing member 341.

Fig. 34C shows only the right half of the plate member 343. The left half of the plate member 343 has the same structure as the right half. Two holes 348 are provided on the right side of the plate member 343. Similarly, two holes 348 are also provided on the left side, which are not shown in Fig. 34B.

A hole 349 is provided on one end of the plate member 343 so that the flower-pot 340 can be hung on a hook or the like provided on the wall.

As shown in Fig. 34D, the plate member 343 is provided with a slit 350. When connecting a plurality of the flower-pots 340 longitudinally, a part containing the hole 349 can be cut off from the plate member 343 by folding and it along this slit 350.

Figs. 35A~J shows a plurality of the connected flower-pots 340.

As shown in Fig. 35A, a plurality of the flower-pots 340 can be connected longitudinally by inserting the projection 345 of a specific flower-pot 340 in the groove 346 of another flower-pot 340.

As shown in Fig. 35B, a plurality of flower-pots 340 can be connected in a direction perpendicular to the longitudinal direction of the flower-pot 340 by inserting the four projections of a joint part 351 in the holes 348 of the plate member 343.

As shown in Fig. 35C, a plurality of flower-pots 340 can be connected in a direction perpendicular to the longitudinal direction of the flower-pot 340 by passing a string 352 through the holes 348 of the plate member 343 like sewing.

Fig.35D shows flower-pots 340 connected by the joint part 351 or string 352 in such a way that 30 flower-pots 340 can be arrayed six by five. Fig. 35E is the top view of the flower-pots 340 connected in such a way.

Fig. 35F shows flower-pots 340 connected by shifting the holes 348 in which the projections of the joint part 351 or string 352 by one compared with the holes 347 in which the projections of the joint part 351 shown in Fig. 35D and 35E. In other words, three flower-pots 340 are connected by one joint part 351. Fig. 35G is the top view of the flower-pots 340 connected in such a way.

As shown in Figs. 35H and 35I, a plurality of connected flower-pots 340 shown in Figs. 35D, 35E, 35F and 35G can be bent like a bow in a direction perpendicular to their connected direction.

Fig. 35J shows a case where a plant 353 is planted in each of the connected flower-pots 340. In this case, disintegrated waste paper 11 and a plant 353 are put in each flower-pot 340, and water and liquid fertilizer is poured.

Such a formed flower-pot 340 can be used as a flower-pot with culture soil by putting disintegrated waste paper 11 in it and making the waste paper 11 contain water and liquid fertilizer. If the stem or root of a plant is inserted in the disintegrated waste paper 11 containing water and liquid fertilizer, it never falls down. Therefore, the disintegrated waste paper 11 containing water and liquid fertilizer can also be used as a needle-point flower holder.

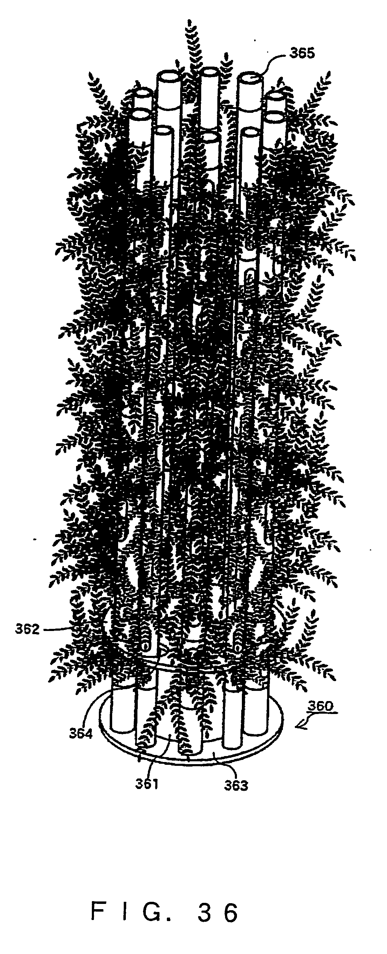

(41) Fig. 36 shows another case where disintegrated waste paper 11 is used culture soil.

Firstly, a part of the hollow part of a piece of green bamboo is cut off, and waste paper 11 disintegrated by the waste paper disintegration device of the above-mentioned preferred embodiment is put in the hollow part, water and liquid fertilizer are put in it and a plant is planted in the waste paper 11.

Then, a plurality of green bamboos with a plant planted in each hollow part is vertically stood in a stand in a circle.

The stand 360 shown in Fig. 36 comprises a cylindrical member 361 and circular members 362 and 363. The cylindrical member 361 is provided with the circular member 362 and 363 on its top and bottom, respectively. The areas of the circular members 362 and 363 are larger than the top and bottom areas, respectively, of the cylindrical member 361. The circular member 362 is provided with ten holes 364 along its outer circumstance at equal intervals. The circular member 363 is provided with ten grooves of the same size as the holes 364 along its outer circumstance at equal intervals. The number of the holes 364 provided on the circular member 362 and the grooves provided on the circular member 363 is not limited to ten.

Then, by inserting the green bamboos 365 with a plant planted each hollow part in the holes 364 of the circular member 362, an art work shown in Fig. 36 can be formed.

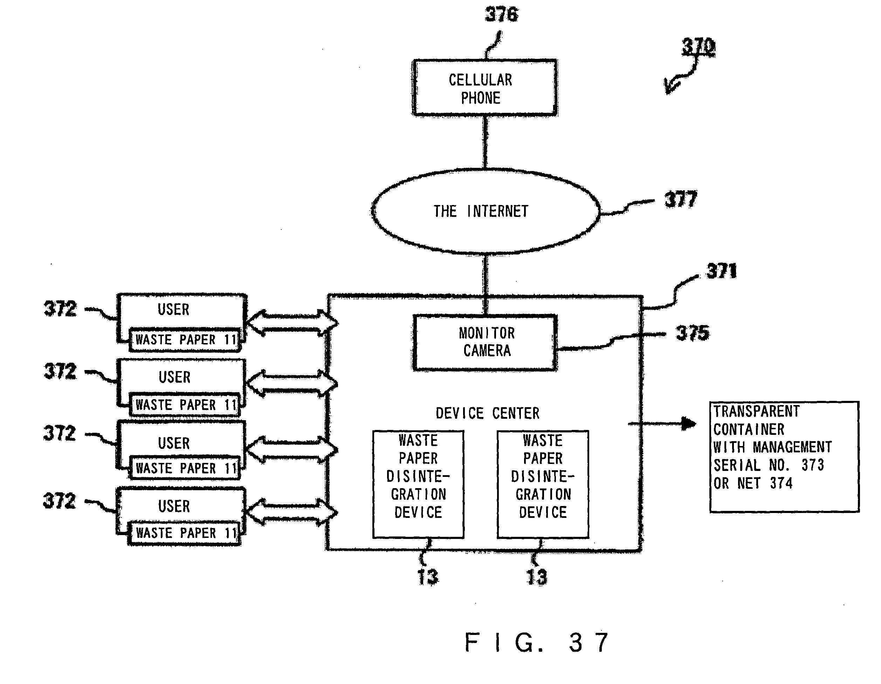

(42) A waste paper fiber utilization system 370 shown in Fig. 37 can also be adopted.

In the waste paper fiber utilization system 370 shown in Fig. 37, a user visits a store in which the waste paper disintegration device 13 is installed, recycles waste paper 11 to a variety of products by selecting a desired service from a plurality of services and pays a fee corresponding to the selected service.

One or more of the waste paper disintegration devices 13 are installed in the device center 371, and waste paper 11 transported by a user 372 is disintegrated by the waste paper disintegration device 13.

The device center 371 can also be moved by carrying the waste paper disintegration device 13 on a truck or the like.

Alternatively, the device center 371 can receive a desired service from a user 372 and an employee operates the waste paper disintegration device 13 according to the user' s desire instead of the user 372.

Alternatively, by providing the waste paper disintegration device 13 with a service selection unit or the like, a user 372 can execute his/her desired service without the help of the employee.

In the device center 371, a user 372 can also pay for his/her desired service via an employee.

Alternatively, by providing the waste paper disintegration device 13 with a fee payment unit, the fee can be automatically paid without the help of an employee.

The device center 371 can attach a management serial number to each service selected by a user 372, put disintegrated waste paper 11 or a recycled product in a transparent container 373 or a net 374 for each selected service and provide the user 372 with it.

A monitor camera 375 always monitors the disintegration status of waste paper 11 and the production status of a recycled product, and its video data is recorded on, for example, a computer or the like provided in the device center 371.

The video data of the monitor camera 375 is distributed to the cellular phone 376 or the like of a user 372 via a network 377 for each service, as requested by the user 372. Thus, the user 372 can check the disintegration status of waste paper 11 and the production status of a recycled product on the display or the like of the cellular phone 376.

The type of waste paper 11 handled by the device center 371 is not especially limited to secret documents, copied paper, newspapers, corrugated cardboard, milk packs, magazines and the like.

Next, services handled by the device center 371 are described.

Firstly, a user 372 selects the type of the disintegration process of waste paper 11. The types of the disintegration processes of waste paper 11, selectable by the user 372 include, for example, a "rough process" in which the waste paper disintegration device 13 is operated for three minutes, a "medium process" in which the waste paper disintegration device 13 is operated for five minutes, a "fine process" in which the waste paper disintegration device 13 is operated for eight minutes, a "special process" in which the waste paper disintegration device 13 is operated for ten minutes and the like.

Then, the user 372 selects the type of a desired recycled product. The types of recycled products, selectable by the user 372 include, for example, simple disintegrated fibers, culture soil for gardening, paper clay for teaching materials, waste oil absorbents, flame-resistant materials for construction and the like.

Furthermore, a user 372 can also select one of a mixing process, such as a zeolite mixing process, a sterilizing process, an effective micro-organisms (EM) mixing process, a coloring process or the like, and a drying process.

Then, after the disintegration process and recycling process are completed, the disintegrated waste paper 11 and the recycled product are put in the transparent container 373 or net 374.

Fee can also be discounted or another service can also be provided when a user 372 uses it the next time and later by handing exchange coupons, tickets or stamps at the time of payment a user 372.

### Industrial Applicability

According to the waste paper fiber utilization system of the present invention, for example, by disintegrating used copied paper discharged from a traditional plant or the like using water at a ratio of waste paper 1 to water 0.6~1.0, the used copied paper can be directly recycled to new paper or products without cutting it by a shredder or the like. Therefore, the process of recycling waste paper to new paper or products can be simplified. Accordingly, the fibers can be recycled to new good paper or products at low cost.

According to the waste paper disintegration device of the present invention, waste paper can be made unreadable by operating it approximately three minutes to prevent information from leaking. By operating it approximately six minutes, waste paper can be disintegrated into fibers. By operating it approximately ten minutes, waste paper can be disintegrated into celluloses.

According to the waste paper disintegration device of the present invention, paper powder, static electricity and noise caused by the disintegration of the waste paper disintegration device can be prevented from occurring, security can be improved, and the waste paper can be quickly disintegrated.

## Claims

1. A waste paper fiber utilization system, comprising:
a disintegration unit for disintegrating waste paper into fibers; and
a recycling unit for recycling the fibers to new products,
said disintegration unit for disintegrating waste paper into fiber using an amount of water such that capable of disintegrating waste paper into fibers and no waste liquid may be caused even when compressing the disintegrated fibers.

2. The waste paper fiber utilization system according to claim 1, wherein
said disintegration unit disintegrates the waste paper at a yield of 100 percent using water such that a ratio in weight of waste paper to be disintegrated to water to be used is 1 to 0.6~1.0 when disintegrating the waste paper.

3. The waste paper fiber utilization system according to claim 1, wherein
said recycling unit mixes the fibers with a predetermined additive to produce a substance with a specific characteristic.

4. The waste paper fiber utilization system according to claim 3, wherein
the additive is one of plaster, rubber, paste, fillings, ceramic powder, carbon powder, a copper wire, an iron wire, cement, inorganic powder and zeolite or a combination of two or more of them.

5. The waste paper fiber utilization system according to claim 1, wherein
said recycling unit colors the fibers in a predetermined color.

6. A waste paper disintegration device which disintegrates waste paper into fibers, comprising:
a rotary feather provided with a plurality of feathers extending from its center;
a storage unit provided inside the rotary feather, for storing the waste paper;
a pouring unit for pouring an amount of water such that capable of disintegrating waste paper and no waste liquid may be caused even when compressing disintegrated fibers; and
a control unit for controlling rotation speed of the rotary feather, based on a type, combination and weight of waste paper stored in the storage unit.

7. The waste paper disintegration device according to claim 6, wherein
said pouring unit for pouring water such that a ratio in weight of waste paper to be disintegrated to water to be used is 1 to 0.6~1.0 when disintegrating the waste paper.

8. The waste paper disintegration device according to claim 6, wherein
said control unit for controlling a rotation time and the amount of water, based on a type, combination and weight of waste paper stored in the storage unit.

9. The waste paper disintegration device according to claim 6, wherein
a projection of a predetermined length is provided on the inner side of a cover provided for said storage unit.

10. The waste paper disintegration device according to claim 6, wherein
said storage unit is provided with a bowl-shaped or conic member on the inner side of its cover.

11. The waste paper disintegration device according to claim 6, wherein
said storage unit is provided with one or more holes on its cover.

12. The waste paper disintegration device according to claim 10, wherein
a projection of a predetermined length is provided on the inner side of said bowl-shaped member or the conic member.

13. The waste paper disintegration device according to claim 6, wherein
said rotary feather is formed in such a way that a space of a predetermined size can be secured between the inside of said storage unit and the tip of a feather of said rotary feather.

14. The waste paper disintegration device according to claim 6, wherein
the plurality of feathers is formed in such a way as to be extended outward as they go away from the center of said rotary feather.

15. The waste paper disintegration device according to claim 6, wherein
said storage unit comprises two or more said rotary feathers.

16. The waste paper disintegration device according to claim 6, wherein
one or more rotary feathers are provided on the inside of a cover provided for said storage unit.

17. The waste paper disintegration device according to claim 6, wherein
one or more rotary feathers are provided on the inner side of said storage unit.

18. The waste paper disintegration device according to claim 6, further comprising
an observation unit which is provided for said storage unit and by which the inside of the storage unit can be observed from the outside.

19. The waste paper disintegration device according to claim 6, further comprising
an illumination unit for illuminating the inside of said storage unit.

20. The waste paper disintegration device according to claim 6, wherein
said storage unit is inclined at a predetermined angle formed between a shaft connecting its center point of the base of the storage unit with its center point of the opening part of the storage unit and a shaft perpendicular to the ground.

21. The waste paper disintegration device according to claim 6, wherein
said storage unit is composed of a plurality of storage units, and of said plurality of storage units, a predetermined storage unit disintegrates waste paper into fibers and another storage unit further disintegrates the waste paper disintegrated by the predetermined storage unit into fibers.

22. A waste paper disintegration device which disintegrates waste paper into fibers, comprising;
a storage unit whose side rotates at predetermined rotation speed, for storing the waste paper,
one or more projection members provided on the inside of the storage unit;
a pouring unit for pouring an amount of water such that capable of disintegrating waste paper into fibers and no waste liquid may be caused even when compressing the disintegrated fibers, into the storage unit; and
a control unit for controlling the rotation speed of the side of the storage unit, based on a type, combination and weight of the waste paper to be stored in the storage unit.

23. A waste paper disintegration device which disintegrates waste paper into fibers, comprising;
a storage unit whose cover rotates at a predetermined rotation speed, for storing the waste paper,
one or more projection members provided on the inner inside of the cover of the storage unit;
a pouring unit for pouring an amount of water such that capable of disintegrating waste paper into fibers and no waste liquid may be caused even when compressing the disintegrated fibers, into the storage unit; and
a control unit for controlling the rotation speed of the cover of the storage unit, based on a type, combination and weight of the waste paper to be stored in the storage unit.

24. A waste paper fiber utilization system, comprising;
a terminal device installed for a user, which is the renter of a waste paper disintegration device for disintegrating waste paper into fibers;
a recycling unit for recycling the fibers to a product;
a monitor unit for monitoring the disintegration work of the waste paper in the waste paper disintegration device;
a management unit for receiving data indicating the monitored contents of the monitor unit from the monitor unit via a network and recording data; and
a transmitting unit for transmitting the monitored data recorded in the management unit to the terminal device via the network,
wherein
said waste paper disintegration device can disintegrate the waste paper into fibers, using an amount of water such that no waste liquid may be caused even when compressing the disintegrated fibers.

25. The waste paper disintegration device according to claim 6, wherein
said rotary feather comprises two feathers each of which extends in the same linear direction from its center, and each of the two feathers comprises a collision plate which collides with the waste paper and crashes it on it [c1]when said rotary feather rotates.

26. The waste paper disintegration device according to claim 25, wherein
said collision plate is vertically provided on each of the two feathers, is disposed in the direction orthogonal to the linear direction and is also extended upward against the two feathers.

27. The waste paper disintegration device according to claim 25, wherein
said rotary feather is provided with a long and slender projection member in a position higher than the collision plate provided on each of the two feathers.

28. The waste paper disintegration device according to claim 6, wherein
said rotary feather rotates and also vertically shifts against said storage unit.

29. The waste paper disintegration device according to claim 6, wherein
a cover provided for said storage unit vertically shifts against said storage unit while said rotary feather is rotating.

30. The waste paper disintegration device according to claim 6, further comprising;
a heating unit provided on the outer circumference of the storage unit, for generating heat with a predetermined temperature; and
an adjustment unit for adjusting the temperature of heat generated by the heating unit.

31. A waste paper disintegration device which disintegrates waste paper into fibers, comprising;
a supply unit for supplying the entire waste paper with a predetermined amount of water;
a first storage unit with a rotary feather for disintegrating waste paper containing the predetermined amount of water supplied by the supply unit, into fibers, for storing the waste paper;
a control unit for controlling a rotating operation of the rotary feather;
a second storage unit provided beneath or side by side the first storage unit, for storing the waste paper disintegrated by the rotary feather; and
a hole with a size such that the waste paper disintegrated by the rotary feather can pass through it, provided on a wall for separating the first and second storage units from each other.

32. The waste paper disintegration device according to claim 31, wherein
said supply unit comprises
a first cylindrical member which touches on one surface of the waste paper, for feeding the waste paper to said first storage when rotating in a predetermined direction; and
a second cylindrical member which touches on the other surface of the waste paper, for feeding the waste paper to the first storage unit when rotating in the direction the reversal of the rotating direction of the first cylindrical member, and
supplies at least one of the first and second cylindrical members with the predetermined amount of water.

33. The waste paper disintegration device according to claim 32, wherein
said supply unit supplies both said first and second cylindrical members with the predetermined amount of water.

34. The Waste paper disintegration device according to claim 31, further comprising
an opening/closing unit provided on a wall for separating said first and second storage units from each other, for opening/closing said hole.

35. The Waste paper disintegration device according to claim 31, further comprising
a third storage unit for storing a plurality of pieces of waste paper before disintegration; and
a feeding unit for feeding the waste paper from the third storage unit to the supply unit at predetermined time intervals.

36. The Waste paper disintegration device according to claim 31, wherein
said supply unit comprises
a first cylindrical member which touches on one surface of the waste paper, for feeding the waste paper to said first storage when rotating in a predetermined direction; and
a second cylindrical member which touches on the other surface of the waste paper, for feeding the waste paper to the first storage unit when rotating in the direction the reversal of the rotating direction of the first cylindrical member, and
a spraying unit for producing fog from the predetermined amount of water and spray it on the waste paper fed by the first and second cylindrical members.

37. The waste paper disintegration device according to claim 31, wherein
said first storage unit is inclined at a predetermined angle.

38. The waste paper disintegration device according to claim 31, wherein
said rotary feather is provided on the side of said first storage unit.

39. The waste paper disintegration device according to claim 32, 33 or 36, wherein
a plurality of circular blades is provided on the side of said first cylindrical member at equal intervals, and
a plurality of grooves corresponding to the plurality of circular blades is provided on the side of said second cylindrical member.

40. The waste paper disintegration device according to claim 32, 33 or 36, wherein
a plurality of convex parts is provided on the side of said first cylindrical member at equal intervals, and
a plurality of concave parts corresponding to the plurality of convex parts is provided on the side of said second cylindrical member.

41. The waste paper disintegration device according to one of claims 31 through 40, wherein
Said control unit controls a rotating operation of said plurality of rotary feather provided on the same shaft.

42. The waste paper disintegration device according to one of claims 31 though 41, wherein
said supply unit further comprises
a third cylindrical member which touched on one surface of the waste paper, for feeding the waste paper to said first storage unit when rotating in a predetermined direction; and
a clumping plate for clumping the other surface of the waste paper, and
a plurality of spike-shaped members is provided on the side of said third cylindrical member.

43. The waste paper disintegration device according to one of claims 31 through 41, wherein
one or more projections is provided on the inner side of said first storage unit.

44. The waste paper disintegration device according to one of claims 31 through 41, wherein
a spiral groove is provided on the inner side of said first storage unit.

45. The waste paper disintegration device according to one of claims 31 through 41, wherein
a plurality of grooves is vertically or horizontally provided on the inner side of said first storage unit.

46. The waste paper disintegration device according to claim 15, wherein
said storage unit comprises a pole member with a side along each rotation orbit of two or more said rotary feathers.

47. The waste paper disintegration device according to claim 6, wherein
a cylindrical member is provided on the rotation shaft of said rotary feather, and
a bar member is provided on the side of said cylindrical member.

48. The waste paper disintegration device according to claim 6, wherein
a cylindrical member is provided on the rotation shaft of said rotary feather, and
a string member is provided on the side of said cylindrical member.

49. The waste paper fiber utilization system according to claim 1, wherein
said recycling unit puts the fibers in a cylinder or a half-cylinder formed in a predetermined shape, and the fibers are used as culture soil in vertical afforestation, hanging afforestation and other afforestation.

50. The waste paper fiber utilization system according to claim 1, wherein
said recycling unit produces flame-resistant fibers by mixing the fibers with boron, a flame-proof material, a flame-resistant material or another material, fills the flame-resistant fibers in a flame-resistant box, bag or another container and produces a heat insulating material.

51. The waste paper fiber utilization system according to claim 1, wherein
said recycling unit makes the fibers contain water or liquid fertilizer and produces culture soil as a needle-point flower holder for arranging flowers.

52. A waste paper fiber utilization system, comprising:
a disintegration unit for disintegrating the waste paper into fibers using an amount of water such that capable of disintegrating waste paper into fibers and no waste liquid may be caused even when compressing disintegrated fibers;
a recycling unit for recycling the fibers to a product according to an instruction of a user;
a monitor unit for monitoring and recording the waste paper disintegration process by a disintegration unit and the production process of a recycled product produced by the recycling unit; and
a transmitting unit for transmitting monitored contents recorded by the monitor unit to a terminal device provided for a user via a network.
